# EUROPEAN PATENT APPLICATION

(11) **EP 4 746 481 A1**
(43) Date of publication of application: **20.05.2026**
(21) Application number: 24850688.3
(22) Date of filing: 24.06.2024
(51) Int. Cl.: H04W 12/082

(54) **COMMUNICATION METHOD AND APPARATUS**

(30) Priority: 04.08.2023 CN 202310986490
(71) Applicant: Huawei Technologies Co., Ltd., Shenzhen, Guangdong 518129 (CN)
(72) Inventor: LEI, Zhongding, Shenzhen, Guangdong 518129 (CN)
(74) Representative: Goddar, Heinz J.
(86) International application number: PCT/CN2024/100983
(87) International publication number: WO 2025/031037

(57) **Abstract**

A communication method and apparatus are provided. The method includes: A terminal sends a first request, where the first request is used to request to revoke a first token. The first request includes first information, the first information is used to determine the first token, and the first token is a token for authorizing a first service to a first user. According to the method, the user can control the terminal to initiate a procedure of revoking the first token, to revoke authorization for the first service corresponding to the first token.

## Description

### CROSS-REFERENCE TO RELATED APPLICATIONS

This application claims priority to Chinese Patent Application No. 202310986490.6, filed with the China National Intellectual Property Administration on August 4, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A capability exposure architecture of a 3rd generation partnership project (3rd generation partnership project, 3GPP) network provides a manner for the 3GPP network to externally provide a service. In such an architecture, an application function (application function, AF) may use a capability provided by the 3GPP network to process and/or obtain 3GPP-related data information. This may include processing and/or obtaining data of the 3GPP network, and may include processing and/or obtaining related data of a user of the 3GPP network. When processing and/or obtaining the related data of the user, the AF needs to obtain authorization from the user. For example, the AF may request the 3GPP network to externally send location information of the user. If the authorization is not obtained from the user, privacy information of the user may be exposed. For another example, the AF may request the 3GPP network to change network quality of service (quality of service, QoS) for the user. If the authorization is not obtained from the user, user experience may be inconsistent with an expectation, and the user may be further charged an extra fee.

After a service is authorized to a user, the authorization for the service may be revoked. How to design a service revocation procedure needs further research.

### SUMMARY

This application provides a communication method and apparatus, to revoke authorization for a service.

**According to a first aspect,** an embodiment of this application provides a communication method. The method may be applied to a terminal, or may be applied to a module, for example, a chip, a chip system, or a processor, in the terminal, or may be applied to a logical node, a logical module, or software that can implement all or some functions of the terminal. The following uses an example in which the method is applied to the terminal for description. The method includes: The terminal may determine first information, where the first information is used to determine a first token, and the first token is a token for authorizing a first service to a first user. The terminal sends a first request, where the first request includes the first information, and the first request is used to request to revoke the first token.

According to the method, the terminal may initiate, by including the first information in the first request, a procedure of revoking the first token. In this way, the user can control the terminal to initiate the procedure of revoking the first token, to revoke authorization for the first service corresponding to the first token.

In a possible design, the first information includes a random number, and the random number is used to determine the first token. According to this design, the terminal may initiate, by including the random number in the first request, a procedure of revoking the first token. In this way, the user can control the terminal to initiate the procedure of revoking the first token, to revoke authorization for the first service corresponding to the first token.

In a possible design, the random number may be used to determine second information via a one-way function, and the second information is used to determine the first token. In this design, the random number may be protected via the one-way function. In this way, an application other than a user agent on the terminal or an AF cannot obtain information related to the random number, and therefore cannot initiate a revocation procedure for the first token, so that communication security of the terminal is improved.

In a possible design, the terminal may further receive a first response. The first response indicates one of the following: the first token is successfully revoked, a procedure of revoking the first token has been triggered, or the first request has been received. The first response includes the random number or the second information, and the second information is obtained based on the one-way function and the random number. According to this design, the terminal can learn, in a timely manner, one of the following: the first token is successfully revoked, a procedure of revoking the first token has been triggered, or the first request has been received.

In a possible design, the terminal may generate the random number and the second information, where the second information is obtained based on the one-way function and the random number. Then, the terminal may send the second information to an authorization function network element, where the second information corresponds to the first token. According to this design, the random number used to initiate the revocation procedure of the first token is generated by the terminal, and may be protected via the one-way function. In this way, an application other than the user agent on the terminal or the AF cannot obtain information related to the random number, and therefore cannot initiate a revocation procedure for the first token, so that communication security of the terminal is improved.

In a possible design, before the terminal generates the random number and the second information, the terminal may detect a first operation of the first user, where the first operation indicates that the first user agrees to authorization of the first service to the first user. According to this design, the terminal generates the random number and the second information only after detecting the first operation of the user. In this way, the terminal does not need to generate a random number for a token that the user does not agree to, so that energy consumption of the terminal can be reduced.

In a possible design, the first information includes auxiliary information used to identify the first token. According to this design, the terminal may initiate, by including the auxiliary information in the first request, a procedure of revoking the first token. In this way, the user can control the terminal to initiate the procedure of revoking the first token, to revoke authorization for the first service corresponding to the first token.

Optionally, the auxiliary information includes at least one of the following:
information used to identify an authorization scope of the first token;
information used to identify a service application programming interface (application programming interface, API) corresponding to the first token;
information used to identify an AzF corresponding to the first token;
information used to identify the first user;
information used to identify an API exposing function corresponding to the first token;
information used to identify a validity period of the first token; and
information used to identify issuance time of the first token.

In a possible design, the terminal may detect a first operation of the first user, where the first operation indicates that the first user agrees to authorization of the first service to the first user. Then, the terminal obtains and stores the auxiliary information. According to this design, the terminal obtains and stores the auxiliary information only after detecting the first operation of the user. In this way, the terminal does not need to obtain and store auxiliary information for a token that the user does not agree to, so that energy consumption of the terminal can be reduced, and storage resources of the terminal can be saved.

In a possible design, the terminal may receive an authorization code corresponding to the first token, where the authorization code is used to determine that the first token corresponding to the auxiliary information is a token authorized by the authorization function network element. In this way, after receiving the authorization code, the terminal may determine that the first token corresponding to the auxiliary information is a token authorized by the authorization function network element, so that a token revocation procedure can be initiated based on the auxiliary information.

In a possible design, the first information includes an authorization code corresponding to the first token. According to this design, the terminal may initiate, by including the authorization code in the first request, a procedure of revoking the first token. In this way, the user can control the terminal to initiate the procedure of revoking the first token, to revoke authorization for the first service corresponding to the first token.

In a possible design, the terminal may receive the authorization code corresponding to the first token from an authorization function network element. In this way, the terminal can obtain the authorization code corresponding to the first token in a timely manner.

In a possible design, the first request further includes indication information of the first user, and the indication information of the first user and the first information are used to determine the first token. The indication information of the first user may be used to quickly narrow a range of a to-be-determined token, to improve a speed of determining the first token. For example, the first apparatus stores tokens of a plurality of users. The first apparatus may select a token of the first user from the tokens of the plurality of users based on the indication information of the first user, and select the first token from the token of the first user based on the first information. The first apparatus may use user indication information as an index of the tokens of the plurality of users. Therefore, the first apparatus can quickly exclude a token of a user other than the first user, to narrow a range of a to-be-determined token, and improve a speed of determining the first token.

In a possible design, the terminal sends the first request to the AzF based on address information of the AzF; or the terminal sends the first request to the AzF through an API invoker. According to this design, the terminal can flexibly send the first request to the AzF.

**According to a second aspect,** an embodiment of this application provides a communication method. The method may be applied to a first apparatus. The first apparatus may be an API invoker, an apparatus (for example, a terminal or an AF) including the API invoker, or an AzF, or may be a module, for example, a chip, a chip system, or a processor, used in the API invoker, the apparatus including the API invoker, or the AzF, or may be a logical node, a logical module, or software that can implement all or some functions of the API invoker, the apparatus including the API invoker, or the AzF. The method includes: The first apparatus may receive a first request from a terminal, where the first request is used to request to revoke a first token, the first request includes first information, the first information is used to determine the first token, and the first token is a token for authorizing a first service to a first user. The first apparatus may determine the first token based on the first request.

According to the method, the terminal may initiate, by including the first information in the first request, a procedure of revoking the first token. In this way, the user can control the terminal to initiate the procedure of revoking the first token, to revoke authorization for the first service corresponding to the first token.

In a possible design, the first information includes a random number, and the random number is used to determine the first token. According to this design, the terminal may initiate, by including the random number in the first request, a procedure of revoking the first token. In this way, the user can control the terminal to initiate the procedure of revoking the first token, to revoke authorization for the first service corresponding to the first token.

In a possible design, the random number is used to determine second information via a one-way function, and the second information is used to determine the first token. In this design, the random number may be protected via the one-way function. In this way, an application other than the user agent on the terminal or the AF cannot obtain information related to the random number, and therefore cannot initiate a revocation procedure for the first token, so that communication security of the terminal is improved.

In a possible design, the first apparatus may further send a first response to the terminal. The first response indicates one of the following: the first token is successfully revoked, a procedure of revoking the first token has been triggered, or the first request has been received. The first response includes the random number or the second information, and the second information is obtained based on the one-way function and the random number. According to this design, the terminal can learn, in a timely manner, one of the following: the first token is successfully revoked, a procedure of revoking the first token has been triggered, or the first request has been received.

In a possible design, the first apparatus may receive the second information from the terminal, where the second information is obtained based on the one-way function and the random number. Then, the first apparatus may associate the second information with the first token. According to this design, the first apparatus can quickly determine the corresponding first token based on the second information.

In a possible design, the first apparatus may send a notification message to an API invoker, where the notification message may indicate one of the following: the first token is successfully revoked, a procedure of revoking the first token has been triggered, or the first request has been received, and the notification message includes indication information of the first token. According to this design, the API invoker can learn, in a timely manner, one of the following: the first token is successfully revoked, a procedure of revoking the first token has been triggered, or the first request has been received.

In a possible design, the first information includes auxiliary information used to identify the first token. According to this design, the terminal may initiate, by including the auxiliary information in the first request, a procedure of revoking the first token. In this way, the user can control the terminal to initiate the procedure of revoking the first token, to revoke authorization for the first service corresponding to the first token.

Optionally, the auxiliary information includes at least one of the following:
information used to identify an authorization scope of the first token;
information used to identify a service API corresponding to the first token;
information used to identify an AzF corresponding to the first token;
information used to identify the first user;
information used to identify an API exposing function corresponding to the first token;
information used to identify a validity period of the first token; and
information used to identify issuance time of the first token.

In a possible design, the first information includes an authorization code corresponding to the first token. According to this design, the terminal may initiate, by including the authorization code in the first request, a procedure of revoking the first token. In this way, the user can control the terminal to initiate the procedure of revoking the first token, to revoke authorization for the first service corresponding to the first token.

In a possible design, the first apparatus may send the authorization code corresponding to the first token to the terminal. In this way, the terminal can obtain the authorization code corresponding to the first token in a timely manner.

In a possible design, the first request further includes indication information of the first user, and the indication information of the first user and the first information are used to determine the first token. The indication information of the first user may be used to quickly narrow a range of a to-be-determined token, to improve a speed of determining the first token. For example, the first apparatus stores tokens of a plurality of users. The first apparatus may select a token of the first user from the tokens of the plurality of users based on the indication information of the first user, and select the first token from the token of the first user based on the first information. The first apparatus may use user indication information as an index of the tokens of the plurality of users. Therefore, the first apparatus can quickly exclude a token of a user other than the first user, to narrow a range of a to-be-determined token, and improve a speed of determining the first token.

In a possible design, the first apparatus may revoke the first token; or the first apparatus sends a second request to the AzF, where the second request is used to request to revoke the first token. According to this design, the first apparatus may revoke the first token or request the AzF to revoke the first token.

In a possible design, the first apparatus may receive the first request sent by the terminal based on address information of the AzF network element; or the first apparatus may receive the first request from the terminal through the API invoker. According to this design, the first apparatus can flexibly receive the first request from the terminal.

**According to a third aspect,** an embodiment of this application provides a communication method. The method may be applied to a terminal, or may be applied to a module, for example, a chip, a chip system, or a processor, in the terminal, or may be applied to a logical node, a logical module, or software that can implement all or some functions of the terminal. The following uses an example in which the method is applied to the terminal for description. The method includes: The terminal may receive third information, where the third information indicates that to-be-revoked authorization is first authorization that allows a first user to use a first service. After detecting a second operation of the first user, the terminal may send fourth information, where the second operation indicates that the first user agrees to revocation of the first authorization, and the fourth information is used to trigger revocation of the first authorization.

According to the method, only after the second operation of the first user is detected, the terminal sends the fourth information used to trigger revocation of the first authorization, that is, trigger a token procedure of a token, thereby avoiding that a service desired by the user is interrupted due to authorization revocation, that is, avoiding denial of service for the user.

In a possible design, before receiving the third information, the terminal sends a third request, where the third request includes indication information of the first service. According to this design, the terminal may trigger revocation of the first authorization by including the indication information of the first service in the third request.

**According to a fourth aspect,** an embodiment of this application provides a communication method. The method may be applied to a third apparatus. The third apparatus may be an AzF, or may be a module, for example, a chip, a chip system, or a processor, used in the AzF, or may be a logical node, a logical module, or software that can implement all or some functions of the AzF. The method includes: The third apparatus sends third information to a terminal, where the third information indicates that to-be-revoked authorization is first authorization that allows a first user to use a first service. The third apparatus may receive fourth information sent by the terminal based on a second operation of the first user, where the second operation indicates that the first user agrees to revocation of the first authorization, and the fourth information is used to trigger revocation of the first authorization.

According to the method, only after the second operation of the first user is detected, the terminal sends the fourth information used to trigger revocation of the first authorization, that is, trigger a token procedure of a token, thereby avoiding that a service desired by the user is interrupted due to authorization revocation, that is, avoiding denial of service for the user.

In a possible design, before sending the third information, the third apparatus may receive a third request from the terminal, where the third request includes indication information of the first service. According to this design, the terminal may trigger revocation of the first authorization by including the indication information of the first service in the third request.

In a possible design, the third apparatus may send fifth information to an API invoker, where the fifth information is used to revoke the first authorization. According to this design, the API invoker may obtain the fifth information used by the user to revoke the first authorization, so that the first authorization can be revoked by using the fifth information.

In a possible design, the fifth information is a second token. Optionally, a type of the second token is revoked token; or a value of a first field in the second token is a specified value. This design provides a plurality of manners in which the second token is used to revoke the first authorization.

**According to a fifth aspect,** this application provides a communication apparatus. The communication apparatus may be a terminal or a module (for example, a circuit or a chip) in the terminal, or may be a logical node, a logical module, or software that can implement all or some functions of the terminal. The communication apparatus has a function of implementing the first aspect. For example, the communication apparatus includes a corresponding module, unit, or means for performing the operations in the first aspect or the third aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the first aspect or the third aspect.

In a possible design, the communication apparatus includes a processor, and the processor may be coupled to a memory. The memory may store a necessary computer program or necessary instructions for implementing the function in the first aspect or the third aspect. The processor may execute the computer program or the instructions stored in the memory. When the computer program or the instructions are executed, the communication apparatus is enabled to implement the method in any possible design of the first aspect or the third aspect.

In a possible design, the communication apparatus includes a processor and a memory. The memory may store a necessary computer program or necessary instructions for implementing the function in the first aspect or the third aspect. The processor may execute the computer program or the instructions stored in the memory. When the computer program or the instructions are executed, the communication apparatus is enabled to implement the method in any possible design of the first aspect or the third aspect.

In a possible design, the communication apparatus includes a processor and an interface circuit. The processor is configured to communicate with another apparatus through the interface circuit, and perform the method in any possible design of the first aspect or the third aspect.

**According to a sixth aspect,** this application provides a communication apparatus. The communication apparatus may be an API invoker, an apparatus (for example, a terminal or an AF) including the API invoker, or an AzF, or may be a module (for example, a circuit or a chip) in the API invoker, the apparatus including the API invoker, or the AzF, or may be a logical node, a logical module, or software that can implement all or some functions of the API invoker, the apparatus including the API invoker, or the AzF. The communication apparatus has a function of implementing the second aspect or the fourth aspect. For example, the communication apparatus includes a corresponding module, unit, or means for performing the operations in the second aspect or the fourth aspect. The module, unit, or means may be implemented by software, may be implemented by hardware, or may be implemented by hardware executing corresponding software.

In a possible design, the communication apparatus includes a processing unit and an interface unit. The interface unit may be configured to receive and send signals, to implement communication between the communication apparatus and another apparatus. The processing unit may be configured to perform some internal operations of the communication apparatus. Functions performed by the processing unit and the interface unit may correspond to the operations in the second aspect or the fourth aspect.

In a possible design, the communication apparatus includes a processor, and the processor may be coupled to a memory. The memory may store a necessary computer program or necessary instructions for implementing the function in the second aspect or the fourth aspect. The processor may execute the computer program or the instructions stored in the memory. When the computer program or the instructions are executed, the communication apparatus is enabled to implement the method in any possible design of the second aspect or the fourth aspect.

In a possible design, the communication apparatus includes a processor and a memory. The memory may store a necessary computer program or necessary instructions for implementing the function in the second aspect or the fourth aspect. The processor may execute the computer program or the instructions stored in the memory. When the computer program or the instructions are executed, the communication apparatus is enabled to implement the method in any possible design of the second aspect or the fourth aspect.

In a possible design, the communication apparatus includes a processor and an interface circuit. The processor is configured to communicate with another apparatus through the interface circuit, and perform the method in any possible design of the second aspect or the fourth aspect.

It may be understood that, in the fifth aspect or the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a seventh aspect,** this application provides a communication system. The communication system may include the communication apparatus according to the fifth aspect and the communication apparatus according to the sixth aspect. Optionally, when the communication apparatus according to the fifth aspect performs the method according to the first aspect, the communication apparatus according to the sixth aspect performs the method according to the second aspect. When the communication apparatus according to the fifth aspect performs the method according to the third aspect, the communication apparatus according to the sixth aspect performs the method according to the fourth aspect.

**According to an eighth aspect,** this application provides a computer-readable storage medium. The computer storage medium stores computer-readable instructions. When a computer reads and executes the computer-readable instructions, the computer is enabled to perform the method in any one of the possible designs of any one of the first aspect to the fourth aspect.

**According to a ninth aspect,** this application provides a computer program product. When a computer reads and executes the computer program product, the computer is enabled to perform the method in any one of the possible designs of any one of the first aspect to the fourth aspect.

**According to a tenth aspect,** this application provides a chip. The chip is configured to read a computer program stored in a memory, to perform the method in any one of the possible designs of any one of the first aspect to the fourth aspect.

For technical effects that can be achieved in any one of the fifth aspect to the tenth aspect, refer to the technical effects that can be achieved in any possible design in any one of the first aspect to the fourth aspect. No repeated description is provided.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a flowchart of a first communication method according to an embodiment of this application;
FIG. 4 is a flowchart of a first token application method according to an embodiment of this application;
FIG. 5 is a flowchart of a first token revocation method according to an embodiment of this application;
FIG. 6 is a flowchart of a second token application method according to an embodiment of this application;
FIG. 7 is a flowchart of a second token revocation method according to an embodiment of this application;
FIG. 8 is a flowchart of a third token application method according to an embodiment of this application;
FIG. 9 is a flowchart of a third token revocation method according to an embodiment of this application;
FIG. 10 is a flowchart of a second communication method according to an embodiment of this application;
FIG. 11 is a flowchart of a third communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes an architecture of a communication system to which a method provided in this application is applied.

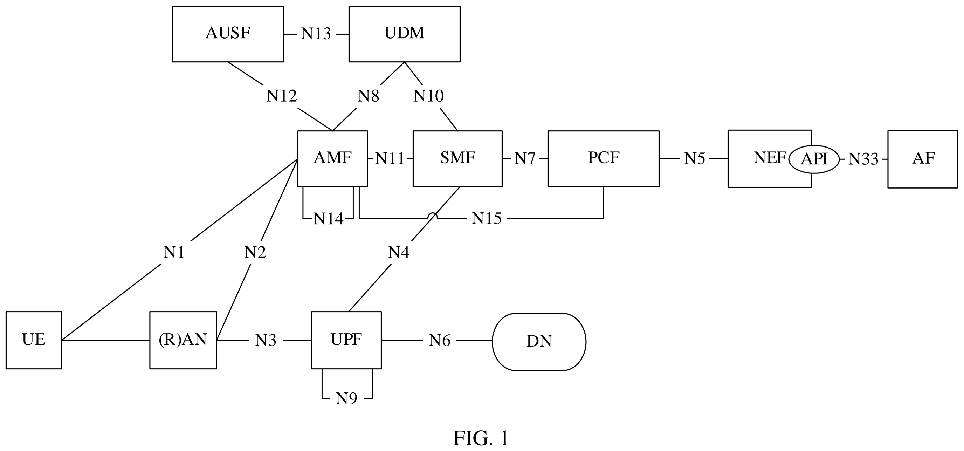

FIG. 1 is a diagram of an architecture of a communication system to which an embodiment of this application is applicable, and shows a 5th generation (the 5^{th} generation, 5G) network architecture based on a service-based architecture. As shown in FIG. 1, the communication system may include three parts: a terminal part, an operator network part, and a data network (data network, DN). The following describes functions of some network elements.

A terminal may also be referred to as a terminal device (terminal device) or user equipment (user equipment, UE), and is a device that has wireless receiving and sending functions; and may be deployed on land, and include an indoor, outdoor, handheld, or in-vehicle terminal; or may be deployed on a water surface (for example, on a ship); or may be deployed in the air (for example, on an aircraft, a balloon, or a satellite). The terminal may be a mobile phone (mobile phone), a tablet computer (pad), a computer having wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

The terminal may establish a connection to an operator network through an interface (for example, N1) provided by the operator network, and use a service such as data and/or voice provided by the operator network. The terminal may further access the DN through the operator network, and use an operator service deployed on the DN and/or a service provided by a third party. The third party may be a service provider other than the operator network and the terminal, and may provide a service such as data and/or voice for the terminal. A specific representation form of the third party may be specifically determined based on an actual application scenario, and is not limited herein.

The operator network may be a network deployed by an operator, and may include an access network device and a core network device. In a possible implementation method, the operator network further includes an AF network element. Alternatively, the AF network element may not belong to the operator network, but belong to a third party.

The access network device is a device in a wireless network, for example, includes a radio access network (radio access network, RAN) node or a radio access network device that connects the terminal to the wireless network. Currently, some examples of the access network device include: a next generation NodeB (gNodeB, gNB) in 5G, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), and the like. In an implementation, the access network device may alternatively be an access network device in a future communication system (for example, a 6th generation (the 6^{th} generation, 6G) communication system).

The core network device may include at least one of the following network elements: a mobility management network element, a session management network element, a user plane network element (for example, a user plane function (user plane function, UPF) network element), a data management network element (for example, a unified data management (unified data management, UDM) network element), a unified data repository (unified data repository, UDR) network element, a network exposure network element (for example, a network exposure function (network exposure function, NEF) network element), a policy control network element (for example, a policy control function (policy control function, PCF) network element), an authentication function network element (for example, an authentication server function (authentication server function, AUSF) network element), or the like. The following separately describes some of the network elements.

In this application, the mobility management network element is a control plane network element provided by the operator network, and is responsible for access control and mobility management for the terminal to access the operator network, for example, including functions such as mobility status management, allocation of a temporary user identity, and user authentication and authorization. In 5G, the mobility management network element may be an access and mobility management function (access and mobility management function, AMF) network element. In future communication such as 6G, the mobility management network element may still be an AMF network element, or have another name. This is not limited in this application.

In this application, the session management network element is a control plane network element provided by the operator network, and is responsible for managing a protocol data unit (protocol data unit, PDU) session of the terminal. The PDU session is a channel used to transmit a PDU, and the terminal and the DN need to transmit PDUs to each other through the PDU session. The SMF network element is responsible for establishment, maintenance, deletion, and the like of the PDU session. Functions of the session management network element include session management (for example, session establishment, modification, and release, including maintenance of a tunnel between a user plane network element and the access network device), selection and control of the user plane network element, service and session continuity (service and session continuity, SSC) mode selection, and roaming. In 5G, the session management network element may be a session management function (session management function, SMF) network element. In future communication such as 6G, the session management network element may still be an SMF network element, or may be a network element that has another name but has all or some functions of the session management network element. This is not limited in this application.

In this application, the network exposure network element is a control plane network element provided by the operator. The network exposure network element exposes an external interface of the operator network to a third party in a secure manner. The interface is, for example, a service API. For example, when the session management network element needs to communicate with a third-party network element, the network exposure network element may serve as a relay for communication between the session management network element and the third-party network element. When the network exposure network element serves as the relay, the network exposure network element may translate identification information of a subscriber and identification information of the third-party network element. For example, when sending a subscriber permanent identifier (subscriber permanent identifier, SUPI) of the subscriber from the operator network to the third party, the network exposure network element may translate the SUPI into an external identity (identity, ID) corresponding to the SUPI. On the contrary, when sending an external ID (a network element ID of the third party) to the operator network, the network exposure network element may translate the external ID into an SUPI. In 5G, the network exposure network element may be an NEF network element. In future communication such as 6G, the network exposure network element may still be an NEF network element, or may have another name. This is not limited in this application.

In embodiments of this application, a communication apparatus configured to implement a function of the access network device, the terminal, or the core network device may be the access network device, the terminal, or the core network device, or may be an apparatus, for example, a chip system, that can support the access network device, the terminal, or the core network device in implementing the function. The apparatus may be mounted in the access network device, the terminal, or the core network device. In the technical solutions provided in embodiments of this application, an example in which an apparatus configured to implement the function of the access network device is the access network device, an apparatus configured to implement the function of the terminal is the terminal, and an apparatus configured to implement the function of the core network device is the core network device is used to describe the technical solutions provided in embodiments of this application.

The DN is a network located outside the operator network. The operator network may access a plurality of DNs, and a plurality of services may be deployed on the DN, to provide a service such as data and/or voice for the terminal. For example, the DN is a private network of a smart factory, a sensor installed in a workshop of the smart factory may be a terminal, a control server of the sensor is deployed in the DN, and the control server may serve the sensor. The sensor may communicate with the control server to obtain an instruction of the control server, transmit collected sensor data to the control server according to the instruction, and the like. For another example, the DN is an internal office network of a company, a mobile phone or a computer of an employee of the company may be a terminal, and the mobile phone or the computer of the employee may access information, data resources, and the like on the internal office network of the company.

In FIG. 1, N1, N2, N3, N4, and the like are interface sequence numbers. For meanings of these interface sequence numbers, refer to meanings defined in the 3GPP standard protocol. This is not limited herein.

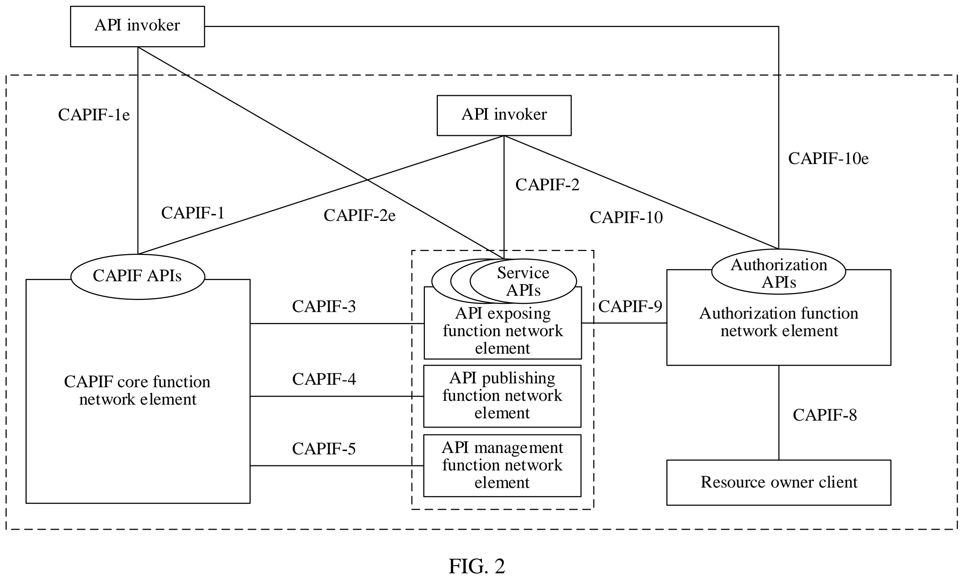

FIG. 2 shows an example of an API system architecture to which an embodiment of this application may be applicable. The architecture may be a common API framework (common API framework, CAPIF) architecture. As shown in FIG. 2, the CAPIF architecture may include an API invoker (API invoker), a CAPIF core function (CAPIF core function, CCF) network element, an authorization function (authorization function, AuF or AzF) network element, and an API exposing function (API exposing function, AEF) network element. Optionally, the CAPIF architecture may further include at least one of the following: an API publishing function (API publishing function, APF) network element, an API management function (API management function) network element, or a resource owner client (resource owner client(s), RO Client). The following describes components of the CAPIF architecture.

The API invoker is usually a third-party application that signs a service agreement with a public land mobile network (public land mobile network, PLMN) operator. The application may run in a terminal or an AF. Therefore, the API invoker may be a part of the terminal or a part of the AF. The API invoker may have the following functions: providing identity information of the API invoker and other information required for authentication on the API invoker; supporting mutual authentication with the CCF; obtaining authorization before accessing a service API; discovering a service API; searching for and invoking a service API; and the like. For a location of the API invoker in a communication network, refer to the AF network element or UE in FIG. 1.

The CCF may have the following functions: performing authentication on the API invoker based on the identity information of the API invoker and the other information required for authentication on the API invoker; supporting mutual authentication with the API invoker; providing authorization for the API invoker before the API invoker accesses a service API; publishing and storing service API information and supporting service API discovery; controlling access to a service API according to a policy configured by the PLMN operator; monitoring service API invocation; storing a service API invocation log and providing the service API invocation log for the authorization function network element; performing charging based on the service API invocation log; adding a new API invoker and deleting an API invoker; storing CAPIF and service API-related policy configurations; supporting an audit based on an access log (for example, detecting whether there is an abuse); and supporting publishing and/or discovering a service API by using another CAPIF core function during interworking with the CAPIF. Optionally, the CCF may be a device in a core network, or may be a device in another network. This is not limited in this application.

The AzF is configured to obtain user authorization. In this application, the AuF and the AzF may be replaced with each other. In addition, the AzF and the CCF each have an authorization function, and the AzF and the CCF may be disposed in a same device, or may be located in different devices. The following uses an example in which the AzF and the CCF are disposed in a same device for description. In this case, the AzF and the CCF may not be distinguished. To be specific, the AzF and the CCF below may be replaced with each other, and may also be referred to as an authorization server (authorization server).

The AEF is configured to provide a service API and is an entry for the API invoker to invoke the service API. The AEF may have the following functions: performing authentication on the API invoker based on the identity information and the other information required for API invoker authentication that are provided by the CCF; verifying the authorization provided by the CCF; and recording a quantity of times that a service API is invoked by the CCF. For example, the AEF may be an NEF. In other words, for a location of the AEF in the communication network, refer to the NEF network element in FIG. 1.

The API publishing function network element is a function network element that enables an API provider to publish an API, and may publish information about a service API to the CCF, so that the API invoker finds the information about the service API in the CCF. It should be noted that the API publishing function network element and the NEF may be co-deployed.

The API management function network element manages a service API, for example, monitors a status of the service API, and records invocation information. It should be noted that the API management function network element and the NEF may be co-deployed.

The RO client is an application client used by a user, and may display an operation interface to the user. The RO client is, for example, an operating system or a browser, and the RO client may be an application on the UE in FIG. 1. In this application, the RO client may also be referred to as a user agent (user agent), and the two may be used interchangeably.

In FIG. 2, CAPIF-1, CAPIF-1e, CAPIF-2, CAPIF-2e, and the like are reference points. For meanings of these reference points, refer to meanings defined in the 3GPP standard protocol. This is not limited herein.

It should be noted that the communication systems shown in FIG. 1 and FIG. 2 do not constitute a limitation on the communication system to which embodiments of this application are applicable. Therefore, a communication method provided in embodiments of this application is further applicable to communication systems of various standards, for example, a long term evolution (long term evolution, LTE) communication system, a 5G communication system, a 6G communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communications, MTC), internet of things (internet of things, IoT), long term evolution-machine to machine (LTE-machine to machine, LTE-M), machine to machine (machine to machine, M2M), internet of things, and the like. In addition, the communication system provided in this application may be used in a terrestrial network (terrestrial network, TN) and/or a non-terrestrial network (non-terrestrial network, NTN). This is not limited. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

For ease of understanding of this application, the following describes terms in this application.
(1) A token (token) is a digital object (digital object), a data field, or a character string, and includes authorization information or authentication information. For example, the token may indicate to authorize one or more services or resources for one or more users.

Tokens may be classified into a plurality of types based on purposes, for example, an access token (access_token), a refresh token (refresh_token), and an identity token (ID token). The access token is a credential (credential) used to access a protected resource, for example, may be used to authorize an API invoker to access an API service, for example, a QoS service, corresponding to the access token through an AEF. The refresh token is a credential used to obtain an access token, for example, may be used to authorize an API invoker to request a CCF for obtaining a new token when a current access token expires. In other words, the refresh token may be used to update use time of the current token. In addition, the refresh token may be alternatively used to shorten a validity period of the current access token or reduce a permission scope (scope) of the current access token.

A token may include a claim (claim). The claim is a small piece of asserted (asserted) information about a token subject (subject), and may include at least one of the following:
1. Expiration time: may be used to determine expiration time of the token. For example, in the claim of the token, expiration time {12/02/2023} indicates that the token expires from December 2, 2023.
2. API invoker identifier (identifier, ID) (API Invoker ID): indicates an API invoker corresponding to the token. For example, the claim of the token includes an API invoker ID #1. If the token is an access token, it indicates that an API invoker corresponding to the API invoker ID #1 is authorized to access an API service corresponding to the access token through an AEF. If the token is a refresh token, it indicates that an API invoker corresponding to the API invoker ID #1 is authorized to request a CCF for obtaining a refreshed token.
3. AEF ID: indicates an AEF corresponding to the token. For example, the claim of the token includes an AEF ID #1. If the token is an access token, it indicates that an API invoker is authorized to access an API service corresponding to the access token through an AEF corresponding to the AEF ID #1.
4. Service indication information: indicates a service authorized by the token. The service indication information may be an API service ID (API service ID), and the API service ID may also be referred to as a service API ID (service API ID) or a service ID (service ID). For example, the claim of the token includes an API service ID #1. If the token is an access token, it indicates that an API invoker is authorized to access an API service corresponding to the API service ID #1 through an AEF.
5. User indication information: indicates a user corresponding to the token. The user indication information may be an ID of the user, or may be an ID of a terminal corresponding to the user.
6. Scope (scope): is used to determine an authorization scope of the token. For example, the scope claim of the token includes an AEF ID #1, an API service ID #1, and an API service ID #2, indicating that an API invoker is authorized to access API services corresponding to the API service ID #1 and the API service ID #2 through an AEF #1.

Optionally, each piece of information in the foregoing claim may be a separate claim. For example, the expiration time is a claim, and the scope is another claim. It should be noted that the service indication information may be a separate claim, or may be included in the claim of scope. A specific claim in which the service indication information is included is not limited in this application.

It should be noted that tokens may be alternatively classified based on whether the tokens include information such as a claim. For example, a token of a structured (structured) type includes one or more pieces of the foregoing claim information. A receiver or verifier (for example, an AEF) of the token can obtain the claim information from the token. For another example, a token of an opaque (opaque) type does not include the foregoing claim information, and a receiver or verifier (for example, an AEF) of the token needs to request another network element by using other information in the token, to indirectly obtain claim information or verify claim information. Optionally, the other information may be index (reference) information, and the index information is, for example, a token ID (token ID) or a reference ID (reference ID). Tokens may be alternatively classified in another manner. For example, a token of a bearer (bearer) type means that a bearer of the token is authorized to use a resource or service corresponding to the token; and a token of a message authentication code (message authentication code, MAC) type requires a bearer of the token to further prove that the bearer has a corresponding MAC key, and then the bearer is authorized to use a resource or service corresponding to the token. A token classification method is not limited in this application.

Optionally, the token may further include a signature. The signature may be a signature of a CCF for the claim of the token, and may be used to protect integrity and/or confidentiality of the token.

In this application, the token may be encrypted, or the token may be unencrypted. If the token is encrypted, a token holder (for example, an API invoker) needs to obtain a decryption key to read the claim in the token. Whether the token is encrypted is not limited in this application.

(2) A user agent (user agent) may also be referred to as an RO client, may be an application corresponding to a user, and may initiate various requests on behalf of the user. The user agent may include at least one of the following: a browser (browser), an application on a terminal, a client, a command line tool, an internet access robot, or the like. The user agent can be provided on a terminal.

In this application, security protection has been performed on a communication channel between two network elements. A specific method for security protection is not limited in this application. The two network elements are, for example, a user agent and an API invoker, a user agent and an AzF, or an API invoker and an AzF.

In the following of this application, association may be replaced with binding.

In the following of this application, "sending information to ... (terminal)" may be understood as that a destination end of the information is the terminal, and may include directly or indirectly sending the information to the terminal. "Receiving information from ... (terminal)" may be understood as that a source end of the information is the terminal, and may include directly or indirectly receiving the information from the terminal. Information may undergo necessary processing, for example, a format change, between a source end and a destination end of information sending. However, the destination end can understand valid information from the source end. Similar expressions in this application may be understood similarly. Details are not described herein again.

Currently, a 3GPP network can externally provide a service. For example, the service externally provided by the 3GPP network includes providing location information of a user. After obtaining authorization for the location information of the user, an API invoker may obtain the location information of the user through the 3GPP network. For another example, the service externally provided by the 3GPP network includes a QoS service. An API invoker may request the 3GPP network for changing a QoS service level of a user or a terminal. After obtaining authorization for a specific level of the QoS service, the API invoker may establish or modify a PDU session corresponding to the level for the user or the terminal through the 3GPP network, so that communication quality of the user or the terminal satisfies a requirement at the level.

After the API invoker obtains authorization, the authorization may be revoked. The international internet engineering task force (internet engineering task force, IETF) standard supports a mechanism for authorization revocation (that is, token revocation) initiated by the API invoker (that is, a client (client)). However, for a token revocation procedure initiated by the API invoker, it cannot be ensured that the token revocation procedure is authorized by the user. For example, when a malicious application exists in a device such as a terminal or a cloud platform, the malicious application may obtain information about a client, and then initiate a token revocation procedure, causing service interruption for the user, that is, denial of service (denial of service, DoS) for the user. For example, for a refresh token, when the malicious application obtains an ID of the refresh token, the malicious application may initiate a revocation procedure for the refresh token. Therefore, how to design service revocation authorized by the user, for example, how to design a token revocation procedure authorized by the user, needs further research.

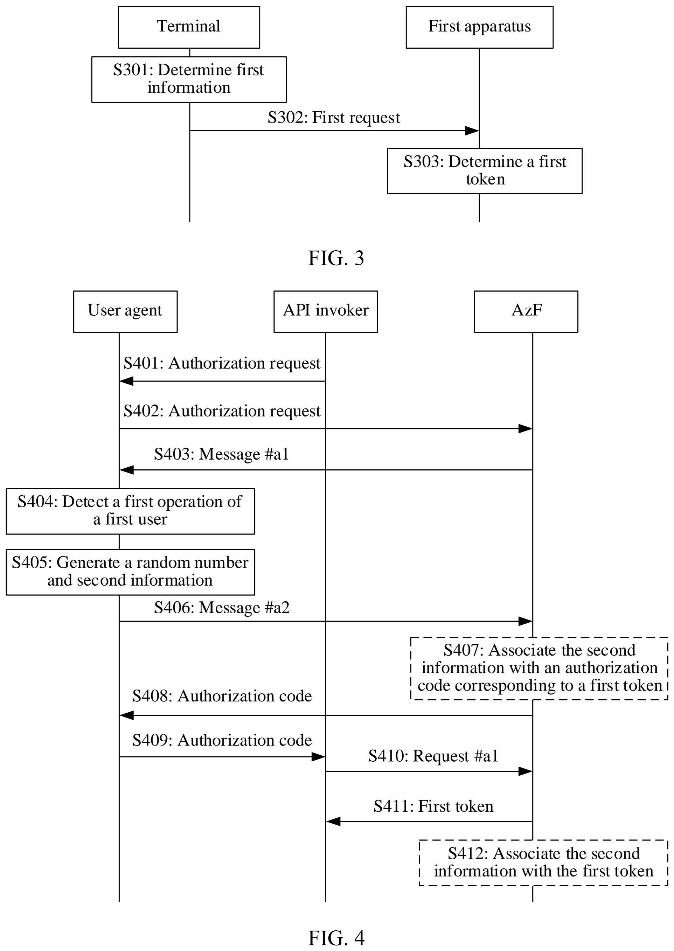

In view of this, embodiments of this application provide a communication method. FIG. 3 is a schematic flowchart corresponding to a communication method according to an embodiment of this application. In FIG. 3, the method is illustrated by using an example in which a terminal and a first apparatus are execution bodies of the interaction illustration. However, the execution bodies of the interaction illustration are not limited in this application. The first apparatus may be an API invoker or an AzF, or may be a module, for example, a chip, a chip system, or a processor, used in the API invoker or the AzF, or may be a logical node, a logical module, or software that can implement all or some functions of the API invoker or the AzF. Optionally, the terminal in FIG. 3 may be replaced with a user agent.

As shown in FIG. 3, the method includes the following steps.

S301: The terminal determines first information, where the first information may be used to determine a first token, and the first token may be a token for authorizing a first service to a first user.

Specific content of the first information is described in the following manner a1, manner a2, and manner a3, and is not described herein.

S302: The terminal sends a first request, and correspondingly, the first apparatus receives the first request.

The first request may include the first information, and the first request is used to request to revoke the first token. In this way, the first apparatus can determine, based on the first information in the first request, that the first request is used to request to revoke the first token. The first request may be an existing message (for example, a revocation request (revocation request)), or may be a new message. This is not limited in this application.

In some examples, the terminal may directly send the first request to the first apparatus. For example, the first apparatus is an API invoker, and the terminal may send the first request to the API invoker based on address information of the API invoker. The address information of the API invoker is, for example, an internet protocol (internet protocol, IP) address and/or a uniform resource locator (uniform resource locator, URL) address of the API invoker. For another example, the first apparatus is an AzF, and the terminal may send the first request to the AzF based on address information of the AzF. The address information of the AzF is, for example, an IP address and/or a URL of the AzF. The address information of the AzF may be obtained by the terminal from an API invoker.

In some other examples, the terminal may send the first request to the first apparatus through a second apparatus. The second apparatus may include one or more apparatuses. For example, the first apparatus is an AzF, and the second apparatus is an API invoker. The terminal may send the first request to the AzF through the API invoker.

Optionally, the first request further includes indication information of the first user. The indication information of the first user is, for example, a name or an ID of the first user, or an ID (for example, an SUPI or a generic public subscription identifier (generic public subscription identifier, GPSI)) of a terminal corresponding to the first user. The indication information of the first user and the first information may be used to determine the first token. For example, the first apparatus stores tokens of a plurality of users. The first apparatus may select a token of the first user from the tokens of the plurality of users based on the indication information of the first user, and select the first token from the token of the first user based on the first information. The first apparatus may use user indication information as an index of the tokens of the plurality of users. Therefore, in this example, the first apparatus can quickly exclude a token of a user other than the first user, to narrow a range of a to-be-determined token, and improve a speed of determining the first token. For another example, the first information corresponds to a plurality of tokens, and a token corresponding to the first user in the plurality of tokens is the first token. In this way, the first apparatus may first find the plurality of tokens based on the first information, and select, from the plurality of tokens based on the indication information of the first user, the token corresponding to the first user as the first token. The plurality of tokens may be tokens of a plurality of users, and the tokens of the plurality of users may be stored by the first apparatus.

S303: The first apparatus determines the first token based on the first request.

The first apparatus may determine the first token based on the first information in the first request. Specific content of determining the first token by the first apparatus is described in the following manner a1, manner a2, and manner a3, and is not described herein.

In some possible manners, the first apparatus is an API invoker. After determining the first token, the API invoker may send a second request to an AzF. The second request may include the first token or indication information (for example, an ID) of the first token, and be used to request to revoke the first token. Then, the AzF may revoke the first token. A specific process in which the AzF revokes the first token is not limited in this application.

In some other possible manners, the first apparatus is an AzF. After determining the first token, the AzF may revoke the first token. A specific process in which the AzF revokes the first token is not limited in this application.

According to the method shown in FIG. 3, the terminal may initiate, by including the first information in the first request, a procedure of revoking the first token. In this way, the user can control the terminal to initiate the procedure of revoking the first token, to revoke authorization for the first service corresponding to the first token.

As described above, the first information may be used to determine the first token. The first information may be used to determine the first token in a plurality of manners, for example, manner a1, manner a2, or manner a3.

**Manner a1:** The first information includes a random number, and the random number may be used to determine the first token.

The random number may be used to determine the first token in a plurality of manners, for example, manner b1 or manner b2.

**Manner b1:** There is a correspondence #1 between the random number and the first token. The first apparatus stores the correspondence #1. In this way, in S303, after receiving the first request including the random number, the first apparatus may determine the first token based on the random number and the correspondence #1, and then determine that the first request is used to request to revoke the first token.

Optionally, the first apparatus may obtain the correspondence #1 by using the following steps A1 to A3.

A1: The terminal generates the random number.

The random number may be generated after the terminal detects a first operation of the first user. The first operation may indicate that the first user agrees to authorization of the first service to the first user. For example, in a process of applying for the first token, the terminal displays a pop-up window #1. The pop-up window #1 includes a display area of "whether to agree to authorization of the first service to the first user" and operation areas of "yes" and "no". The first operation may include a touchscreen operation performed by the first user on the operation area of "yes".

Optionally, after generating the random number, the terminal may store the random number.

In some possible manners, the terminal may store a correspondence between the random number and the first service and/or the first user, so that the terminal determines the first token based on the correspondence. For example, the terminal may store indication information of the first service corresponding to the random number. In this way, the terminal can determine the first service based on the random number. For another example, the terminal may store indication information of the first user corresponding to the random number. In this way, the terminal can determine the first user based on the random number. For another example, the terminal may store indication information of the first service and indication information of the first user that correspond to the random number. In this way, the terminal can determine the first service for the first user based on the random number. Optionally, the terminal may alternatively store a correspondence between the random number and authorization information other than the indication information of the first service and the indication information of the first user, to more accurately determine the first token. For example, the authorization information may include but is not limited to at least one of the following: information about an authorization scope, information about a service API, information about an AzF, information about an AEF, information about an authorization validity period, information about authorization time, or the like.

A2: The terminal sends the random number, and correspondingly, the first apparatus receives the random number.

For a manner in which the terminal sends the random number, refer to the manner in which the terminal sends the first request in S302. Only the first request is replaced with the random number. Details are not described herein again. The random number may be included in an existing message, or may be included in a new message. This is not limited in this application. Optionally, before sending the random number or when sending the random number, the terminal may encrypt the random number. Correspondingly, the first apparatus may decrypt a received message to obtain the random number. Whether to encrypt the random number is not limited in this application.

Optionally, the terminal may send the random number in a process of applying for the first token. For example, after detecting the first operation and generating the random number, the terminal may send the random number. For specific content of detecting the first operation, refer to step A1. Details are not described herein again.

A3: The first apparatus associates the random number with the first token or an authorization code corresponding to the first token, to obtain the correspondence #1. The correspondence #1 may be a direct correspondence between the random number and the first token, or may be a correspondence between the random number and the authorization code corresponding to the first token. Optionally, after obtaining the correspondence #1, the first apparatus may store the correspondence #1.

In some possible manners, in manner b1, after S303, the method shown in FIG. 3 further includes step A4.

A4: The first apparatus sends a first response; and correspondingly, the terminal receives the first response.

The first response may indicate one of the following: the first token is successfully revoked, a procedure of revoking the first token has been triggered, or the first request has been received. Optionally, the first response includes the random number. In this way, after receiving the first response, the terminal may determine, based on the random number and the correspondence #1 between the random number and the first token, one of the following: the first token is successfully revoked, a procedure of revoking the first token has been triggered, or the first request has been received. The first response may be an existing message (for example, a revocation response (revocation response)), or may be a new message. This is not limited in this application.

In some examples, the first apparatus may directly send the first response to the terminal. For example, the first apparatus is an AzF, and the AzF may send the first response to the terminal based on address information of the terminal. The address information of the terminal is, for example, an IP address of the terminal.

In some other examples, the first apparatus may send the first response to the terminal through a second apparatus. The second apparatus may include one or more apparatuses. For example, the first apparatus is an AzF, and the second apparatus is an API invoker. The AzF may send the first response to the terminal through the API invoker.

In this manner, the terminal can learn in a timely manner that the first token has been successfully revoked, a procedure of revoking the first token has been triggered, or the first apparatus has received the first request.

**Manner b2:** The random number is used to determine second information via a one-way function. In other words, there is a function relationship between the random number and the second information, or the second information is determined based on the random number and the one-way function. The second information may be used to determine the first token. For example, the one-way function may be a hash (hash) function, a key derivation function (key derivation function, KDF), or the like. The following uses an example in which the one-way function is a hash function for description.

In some possible manners, there is a correspondence #2 between the second information and the first token. The first apparatus stores the correspondence #2 and the hash function. In this way, in S303, after receiving the first request including the random number, the first apparatus may determine the second information based on the random number and the hash function, determine the first token based on the second information and the correspondence #2, and then determine that the first request is used to request to revoke the first token. For example, the random number is rand. After receiving the first request, the first apparatus may calculate Utid=hash(rand), where Utid is the second information. Then, the first apparatus may determine, based on Utid and the correspondence #2, the first token corresponding to Utid. Optionally, when Utid is calculated, the one-way function may further include a parameter other than the random number. For example, the one-way function may be represented as: Utid=hash(rand, another parameter). For example, the another parameter may include at least one of the following: an ID of the terminal, an ID of the first apparatus, or the like. It should be noted that a quantity and values of other parameters are not limited in this application. A method (for example, the one-way function) for calculating the second information by the first apparatus and a quantity and/or a type of parameters needed for calculating the second information may be preconfigured, or may be determined by the first apparatus and the terminal through negotiation. This is not limited in this application.

Optionally, the first apparatus may obtain the correspondence #2 by using the following steps B1 to B3.

B1: The terminal generates the random number and the second information.

For specific content of generating the random number by the terminal, refer to step A1. Details are not described herein again. After generating the random number, the terminal may perform calculation on the random number via the one-way function, to obtain the second information. A method for calculating the second information by the terminal is the same as the method for calculating the second information by the first apparatus. For details, refer to the description that the first apparatus can determine the second information based on the random number and the hash function in manner b2. Details are not described herein again.

Optionally, after generating the random number, the terminal may store the random number.

B2: The terminal sends the second information, and correspondingly, the first apparatus receives the second information.

For a manner in which the terminal sends the second information, refer to the manner in which the terminal sends the random number in step A2. Only the random number is replaced with the second information. Details are not described herein again.

B3: The first apparatus associates the second information with the first token, to obtain the correspondence #2. The correspondence #2 may be a direct correspondence between the second information and the first token, or may be a correspondence between the second information and the authorization code corresponding to the first token. When the correspondence #2 is the direct correspondence between the second information and the first token, the second information may be in one-to-one correspondence with the first token, so that accuracy of determining the first token based on the second information can be improved. Optionally, after obtaining the correspondence #2, the first apparatus may store the correspondence #2.

In some possible manners, in manner b2, after S303, the method shown in FIG. 3 further includes step B4.

B4: The first apparatus sends a first response; and correspondingly, the terminal receives the first response.

The first response may indicate one of the following: the first token is successfully revoked, a procedure of revoking the first token has been triggered, or the first request has been received. In some examples, the first response includes the random number. In this way, after receiving the first response, the terminal may determine the second information based on the random number and the hash function, determine the first token based on the second information and the correspondence #2, and then determine that the first response indicates one of the following: the first token is successfully revoked, a procedure of revoking the first token has been triggered, or the first apparatus has received the first request. In some other examples, the first response includes the second information. In this way, after receiving the first response, the terminal may determine, based on the second information and the correspondence #2, one of the following: the first token is successfully revoked, a procedure of revoking the first token has been triggered, or the first apparatus has received the first request. The first response may be an existing message (for example, a revocation response), or may be a new message. This is not limited in this application.

For a manner in which the first apparatus sends the first response, refer to step A4. Details are not described herein again.

In this manner, the terminal can learn in a timely manner that the first token is successfully revoked.

In some possible manners, after S303, the method shown in FIG. 3 further includes step B5.

B5: The first apparatus sends a notification message to an API invoker, and correspondingly, the API invoker receives the notification message from the first apparatus.

The notification message indicates one of the following: the first token is successfully revoked, a procedure of revoking the first token has been triggered, or the first request has been received. For example, the notification message may include the indication information (for example, a token ID) of the first token. In this way, after receiving the notification message, the API invoker may determine one of the following: the first token is successfully revoked, a procedure of revoking the first token has been triggered, or the first apparatus has received the first request.

A sequence of performing step B4 and step B5 is not limited in this application.

In manner a1, the terminal may initiate a revocation procedure of the first token based on the random number. In this way, the user can control, by using a user agent on the terminal, the terminal to initiate the revocation procedure of the first token, so that the revocation procedure is authorized by the user, thereby avoiding that a service desired by the user is interrupted due to authorization revocation, that is, avoiding denial of service for the user.

In addition, in manner a1, the random number used to initiate the revocation procedure of the first token is generated by the terminal, and may be protected via the one-way function. In this way, an application other than the user agent on the terminal or the AF cannot obtain information related to the random number, and therefore cannot initiate a revocation procedure for the first token, so that communication security of the terminal is improved.

**Manner a2:** The first information includes auxiliary information used to identify the first token. In this way, in S303, the first apparatus may determine the first token based on the auxiliary information.

For example, the auxiliary information may include at least one of the following:
1. Information used to identify an authorization scope (scope) of the first token (referred to as information #1 below): For example, the information #1 may indicate at least one of the following: an authorized service scope, an authorized permission scope (for example, read (read) or write (write)), or a method for verifying indication information of a user (for example, an open identifier (openID) method). The authorized service scope may include an authorized service scope corresponding to each AEF. Optionally, the information #1 may be used to determine a scope in a claim of the first token.
2. Information used to identify a service API corresponding to the first token (referred to as information #2 below): For example, the information #2 may indicate at least one of the following: a QoS service, obtaining location information of the terminal, and a service to which the first user subscribes. Optionally, the information #2 may be used to determine an API service ID in the claim of the first token.
3. Information used to identify an AzF corresponding to the first token (referred to as information #3 below): For example, the information #3 may include at least one of the following: a name, a uniform resource locator (uniform resource locator, URL), an ID, or the like of an issuer (issuer) of the first token. The information #3 may be used to determine a claim (or parameter) "iss" in a claim set of the first token. The claim "iss" indicates the issuer of the first token. For example, the issuer of the first token may be the AzF corresponding to the first token.
4. Information used to identify user indication information (referred to as information #4 below): For example, the information #4 may include the indication information of the first user. For specific content of the indication information of the first user, refer to the description of the indication information of the first user in S302. Details are not described herein again. The information #4 may be used to determine a claim "sub" in the claim set of the first token, and the claim indicates a subject of the first token, that is, an authorized user of the first token. For example, the subject of the first token may be the first user or the terminal corresponding to the first user.
5. Information used to identify an AEF network element corresponding to the first token (referred to as information #5 below): For example, the information #5 may include at least one of the following: a name, a URL, an ID, or the like of the AEF network element corresponding to the first token. The information #5 may be used to determine a parameter "aud" in the claim of the first token, and the parameter indicates a receiver (audience) of the first token. The receiver of the first token may include the AEF network element corresponding to the first token.
6. Information used to identify a validity period of the first token (referred to as information #6 below): The information #6 may be used to determine a parameter "exp" in the claim of the first token, and the parameter indicates expiration time (expiration time) of the first token.
7. Information used to identify issuance time of the first token (referred to as information #7 below): The information #7 may be used to determine a claim or parameter "iat" (that is, issued at) in the claim set of the first token, and the parameter indicates the issuance time of the first token.

It should be noted that the auxiliary information may further include information other than the foregoing seven types of information. Optionally, the auxiliary information may include information corresponding to any claim in the first token and/or any information in the claim of the first token. The first apparatus determines the first token by identifying the claim corresponding to the auxiliary information, or identifying the information in the claim corresponding to the auxiliary information. The auxiliary information helps narrow a search range for determining the first token in a plurality of tokens, so that the first token can be accurately determined. For example, if the claim of the token includes an API invoker identifier, the auxiliary information may include information used to identify the API invoker identifier. The first apparatus may identify the API invoker identifier in the claim based on the information used to identify the API invoker identifier, to determine the first token including the API invoker identifier.

Optionally, the auxiliary information and the information in the claim of the first token may be different in terms of format, accuracy, and/or the like. For example, the information #7 in the auxiliary information may include July 2023. The claim "iat" of the first token may include July 27, 2023.

After receiving the auxiliary information, the first apparatus may search, based on the auxiliary information, a token database for the first token that matches the auxiliary information. The token database may be stored in the first apparatus, or may be stored in an apparatus other than the first apparatus. This is not limited in this application. Optionally, the first apparatus may compare the auxiliary information with a claim of a token in the token database, and select a token whose claim is consistent with the auxiliary information as the first token. For example, in the auxiliary information, the information #2 indicates a QoS service, the information #4 indicates a user #1, the information #5 indicates an AEF network element #1, and the information #6 indicates September 10, 2023. The token database includes a token #1. In a claim of the token #1, an API service ID indicates the QoS service, a claim "sub" indicates the user #1, a claim "aud" indicates the AEF network element #1, and a claim "exp" indicates September 10, 2023. The first apparatus may determine the token #1 as the first token.

In some possible manners, the auxiliary information may be obtained and stored by the terminal after the terminal detects the first operation of the first user. For specific content of detecting the first operation of the first user by the terminal, refer to manner a1. Details are not described herein again.

Optionally, the AzF may further send the authorization code corresponding to the first token. Correspondingly, the terminal receives the authorization code corresponding to the first token. The terminal may determine, based on the authorization code, that the first token corresponding to the auxiliary information is a token authorized by the AzF. In other words, the authorization code may be used to determine that the first token corresponding to the auxiliary information is a token authorized by the AzF.

In manner a2, the terminal may initiate a revocation procedure of the first token based on the auxiliary information. In this way, the user can control, by using a user agent on the terminal, the terminal to initiate the revocation procedure of the first token, so that the revocation procedure is authorized by the user, thereby avoiding that a service desired by the user is interrupted due to authorization revocation, that is, avoiding denial of service for the user.

**Manner a3:** The first information includes an authorization code corresponding to the first token. In this way, in S303, the first apparatus may determine the first token based on the authorization code.

The authorization code may be obtained by the terminal from an AzF. For example, in a process of applying for the first token, the AzF sends the authorization code to the terminal. For a manner in which the AzF sends the authorization code to the terminal, refer to the manner in which the first apparatus sends the first response in step A4. Only the first apparatus is replaced with the AzF, and the first response is replaced with the authorization code. Details are not described herein again.

Optionally, the terminal may store at least one of the following: a correspondence between the authorization code and the first service and/or the first user, or a correspondence between the authorization code and authorization information other than the indication information of the first service and the indication information of the first user, so that the terminal determines the first token based on the correspondence. For a manner in which the terminal stores the foregoing correspondence, refer to the descriptions of the following content in step A1: The terminal stores the correspondence between the random number and the first service and/or the first user. The terminal stores the correspondence between the random number and the authorization information other than the indication information of the first service and the indication information of the first user. Only the random number is replaced with the authorization code. Details are not described herein again.

It should be understood that the authorization code may correspond to one or more tokens, and the one or more tokens include the first token. In some examples, the first apparatus may determine the one or more tokens based on the authorization code, and trigger revocation of each of the one or more tokens. The following uses the first token as an example to describe a manner in which the first apparatus determines the one or more tokens. For example, the first apparatus stores a correspondence #3 between the authorization code and the first token. After receiving the authorization code, the first apparatus may determine the first token based on the authorization code and the correspondence #3. In some other examples, the first request in S302 includes the authorization code and the indication information of the first service. The first apparatus determines the one or more tokens based on the authorization code; and the first apparatus selects a token that is in the one or more tokens and that corresponds to the indication information of the first service as the first token, and triggers revocation of the first token.

In manner a3, the terminal may initiate a revocation procedure of the first token based on the authorization code. In this way, the user can control, by using a user agent on the terminal, the terminal to initiate the revocation procedure of the first token, so that the revocation procedure is authorized by the user, thereby avoiding that a service desired by the user is interrupted due to authorization revocation, that is, avoiding denial of service for the user.

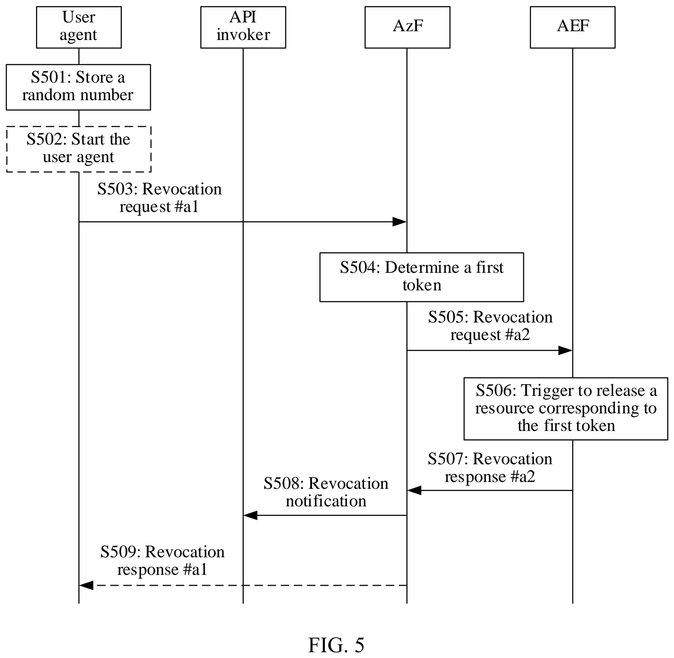

An embodiment of this application provides another communication method. The method is a possible example of the method shown in FIG. 3. In the method, first information is a random number, and a user agent may initiate a revocation procedure of a first token based on the random number. Refer to flowcharts shown in FIG. 4 and FIG. 5. The following specifically describes a procedure of the method by using an example in which a first apparatus is an AzF and a second apparatus is an API invoker.

FIG. 4 shows a method for applying for a first token. The method includes the following steps.

S401: An API invoker sends an authorization request to a user agent in a terminal.

The authorization request may be used to request to authorize a first service to a first user. Optionally, the authorization request may include at least one of the following: indication information of the API invoker (for example, an ID of the API invoker) or a requested authorization scope. The requested authorization scope may include indication information of the first service.

S402: The user agent sends the authorization request to an AzF.

S403: The AzF sends a message #a1 to the user agent.

The message #a1 is used to request to confirm whether the first user agrees to authorization of the first service to the first user. Optionally, the message #a1 may include the requested authorization scope.

S404: The user agent detects a first operation of the first user, where the first operation may indicate that the first user agrees to authorization of the first service to the first user.

For specific content of detecting the first operation of the first user by the user agent, refer to step A1. Details are not described herein again.

S405: The user agent generates a random number and second information.

For specific content of S405, refer to step B1. Details are not described herein again.

S406: The user agent sends a message #a2 to the AzF.

The message #a2 indicates that the first user agrees to authorization of the first service to the first user. The message #a2 further includes the second information.

S407: The AzF associates the second information with an authorization code corresponding to the first token. Optionally, the AzF may store a correspondence between the second information and the authorization code.

S408: The AzF sends the authorization code corresponding to the first token to the user agent.

An execution sequence of S407 and S408 is not limited in this application.

S409: The user agent sends the authorization code to the API invoker.

S410: The API invoker sends a request #a1 to the AzF.

The request #a1 includes the authorization code, and may be used to request to obtain the first token.

S411: The AzF sends the first token to the API invoker.

For specific content of S401 to S404, S406, and S408 to S411, refer to descriptions of a token application procedure in the IETF standard.

S407 is an optional step. For example, after S410, the method shown in FIG. 4 further includes S412: The AzF associates the second information with the first token. Optionally, the AzF may store a correspondence between the second information and the first token. An execution sequence of S411 and S412 is not limited in this application. When the method shown in FIG. 4 includes S412, the method shown in FIG. 4 may not include S407.

According to the method shown in FIG. 4, the user agent may generate the random number and the second information, and the AzF may associate the second information with the first token or the authorization code corresponding to the first token.

FIG. 5 shows a method for revoking a first token. The method includes the following steps.

S501: A user agent stores a random number.

The random number may be generated by the user agent in S405.

Optionally, the user agent in a terminal may further store indication information of a first user. For specific content of the indication information of the first user, refer to the description of the indication information of the first user in S302. Details are not described herein again.

S502: After detecting an operation of the first user for running the user agent, the terminal starts the user agent.

S502 is an optional step. For example, when the user agent is already in a started state, the method shown in FIG. 5 may not include S502.

S503: The user agent sends a revocation request #a1 including the random number to an AzF.

The revocation request #a1 may be the first request in S302. Correspondingly, for S503, refer to S302. No repeated description is provided.

S504: The AzF determines the first token based on the random number.

For specific content of S504, refer to manner b2. Details are not described herein again.

S505: The AzF sends a revocation request #a2 to an AEF, where the revocation request #a2 is used to request to release a resource corresponding to the first token.

In some examples, the revocation request #a2 may include information in the first token. For example, the revocation request #a2 may include at least one of the following information in the first token: service indication information and claim information such as a scope. In this way, after receiving the revocation request #a2, the AEF may determine that the revocation request #a2 is used to request to release the resource corresponding to the first token.

In some other examples, the revocation request #a2 may include the first token and/or indication information of the first token (for example, an ID of the first token). In this way, after receiving the revocation request #a2, the AEF may determine that the revocation request #a2 is used to request to release the resource corresponding to the first token.

S506: The AEF triggers to release the resource corresponding to the first token.

A specific process in which the AEF triggers to release the resource corresponding to the first token is not limited in this application.

S507: The AEF sends a revocation response #a2 to the AzF.

The revocation response #a2 is a response message to the revocation request #a2, and indicates one of the following: release of the resource corresponding to the first token succeeds or has been triggered, or the revocation request #a2 has been received.

S508: The AzF sends a revocation notification to the API invoker, where the revocation notification may indicate one of the following: the first token is successfully revoked, a procedure of revoking the first token has been triggered, or the revocation request #a2 has been received.

The revocation notification may be the notification message in step B5. Correspondingly, for specific content of S508, refer to step B5. Details are not described herein again.

Optionally, after receiving the revocation notification, the API invoker may update a token database, for example, identify the first token in the token database as revoked.

S509: The AzF sends a revocation response #a1 to the user agent.

The revocation response #a1 is a response message to the revocation request #a1, and indicates one of the following: the first token is successfully revoked, a procedure of revoking the first token has been triggered, or the revocation request #a1 has been received. The revocation response #a1 may be the first response in step B4. Correspondingly, for specific content of S509, refer to step B4. Details are not described herein again.

An execution sequence of S508 and S509 is not limited in this application.

S509 is an optional step.

According to the methods shown in FIG. 4 and FIG. 5, the user agent may initiate the revocation procedure of the first token based on the random number, so that the revocation procedure is authorized by the user. In addition, the AzF associates the second information with the first token or the authorization code corresponding to the first token, so that the first token can be accurately identified, and the first token that the user expects to revoke can be revoked, thereby avoiding that a service desired by the user is interrupted due to authorization revocation, that is, avoiding denial of service for the user. In addition, in the method, the random number used to initiate the revocation procedure of the first token is generated by the terminal, and may be protected via a one-way function. In this way, a third-party application on the terminal or the AF cannot obtain information related to the random number, and therefore cannot initiate a revocation procedure for the first token, so that security of the token revocation procedure is improved.

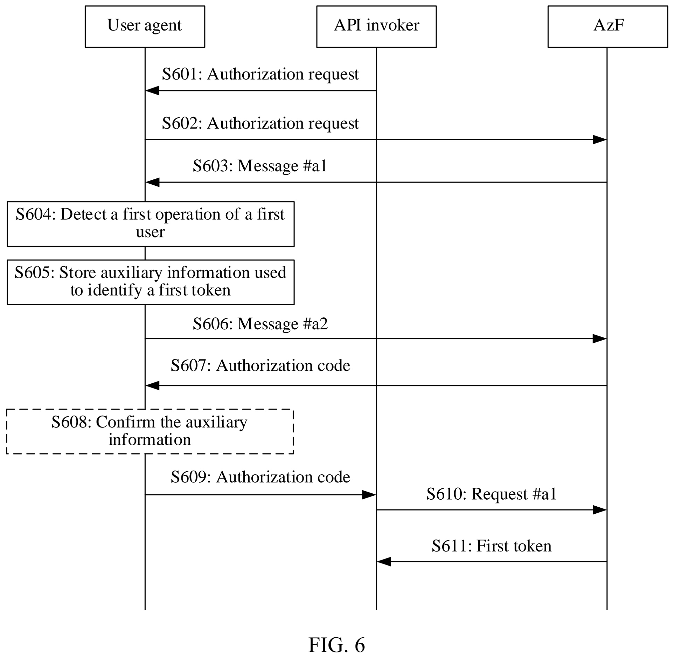

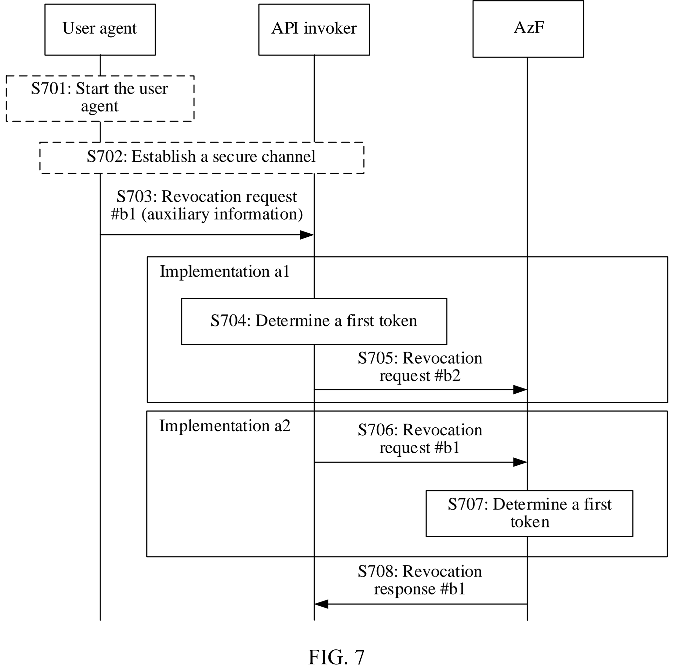

An embodiment of this application provides another communication method. The method is another possible example of the method shown in FIG. 3. In the method, first information is auxiliary information, and a user agent may initiate a revocation procedure of a first token based on the auxiliary information. Refer to flowcharts shown in FIG. 6 and FIG. 7. The following specifically describes a procedure of the method by using an example in which a first apparatus is an AzF or an API invoker.

FIG. 6 shows a method for applying for a first token. The method includes the following steps.

S601: An API invoker sends an authorization request to a user agent in a terminal.

S602: The user agent sends the authorization request to an AzF.

S603: The AzF sends a message #a1 to the user agent.

S604: The user agent detects a first operation of a first user, where the first operation may indicate that the first user agrees to authorization of a first service to the first user.

For specific content of S601 to S604, refer to S401 to S404. Details are not described herein again.

S605: The user agent stores auxiliary information used to identify the first token.

For specific content of the auxiliary information, refer to the description of the auxiliary information in manner a2. Details are not described herein again.

An execution sequence of S605 and S604 is not limited in this application. For example, S605 may be performed before S604 (after S603 is performed). It should be noted that an advantage of storing the auxiliary information after S605 is that a token corresponding to the auxiliary information has been authorized by the user. For auxiliary information stored before S604, a token application corresponding to the auxiliary information has not been authorized by the user. Optionally, after the auxiliary information is stored, if the user agent detects that the user does not agree to authorization of the first service to the first user, the user agent may delete the stored auxiliary information.

S606: The user agent sends a message #a2 to the AzF.

The message #a2 indicates that the first user agrees to authorization of the first service to the first user.

S607: The AzF sends an authorization code corresponding to the first token to the user agent.

S608: The user agent confirms the auxiliary information based on the authorization code.

Specifically, after receiving the authorization code corresponding to the first token, the user agent may confirm that the authorization code has been successfully obtained for a token request corresponding to the auxiliary information, and the auxiliary information stored in S605 may continue to be retained. Optionally, if the user agent does not receive the authorization code within specified time, the user agent may delete the auxiliary information stored in S605. The specified time may be preset, or may be determined by the user agent, or may be set by a network side for the user agent. This is not limited in this application.

S608 is an optional step.

S609: The user agent sends the authorization code to the API invoker.

An execution sequence of S608 and S609 is not limited in this application.

S610: The API invoker sends a request #a1 to the AzF.

The request #a1 includes the authorization code, and may be used to request to obtain the first token.

S611: The AzF sends the first token to the API invoker.

For specific content of S601 to S604, S606 and S607, and S609 to S611, refer to descriptions of a token application procedure in the IETF standard.

According to the method shown in FIG. 6, the user agent may store the auxiliary information used to identify the first token.

FIG. 7 shows a method for revoking a first token. The method includes the following steps.

S701: After detecting an operation of a first user for running a user agent, a terminal starts the user agent.

For specific content of S701, refer to S502. Details are not described herein again.

S702: Establish a secure channel between the user agent and an API invoker.

For example, the user agent is a web browser, and a transport layer security (transport layer security, TLS) channel may be established between the user agent and the API invoker. The TLS channel may be a hypertext transfer protocol secure (Hypertext transfer protocol secure, HTTPS) channel.

S702 is an optional step. For example, when communication between the user agent and the API invoker is secure or has been protected in another manner, the method shown in FIG. 7 may not include S702.

S703: The user agent sends a revocation request #b1 including auxiliary information to the API invoker.

The revocation request #b1 may be the first request in S302. Correspondingly, for S703, refer to S302. Details are not described herein again.

In implementation a1, the first apparatus may be an API invoker. After S703, the method shown in FIG. 7 includes S704 and S705.

S704: The API invoker determines the first token based on the auxiliary information.

For specific content of S704, refer to manner a2. Details are not described herein again.

S705: The API invoker sends a revocation request #b2 to an AzF.

The revocation request #b2 may include the first token and/or indication information of the first token, and be used to request to revoke the first token. After receiving the revocation request #b2, the AzF may revoke the first token. A specific process in which the AzF revokes the first token is not limited in this application.

In implementation a2, the first apparatus may be an AzF. After S703, the method shown in FIG. 7 includes S706 and S707.

S706: The API invoker sends the revocation request #b1 including the auxiliary information to an AzF.

S707: The AzF determines the first token based on the auxiliary information.

For specific content of S707, refer to manner a2. Details are not described herein again.

After determining the first token, the AzF may revoke the first token. A specific process in which the AzF revokes the first token is not limited in this application.

After S705 or S707, the method shown in FIG. 7 further includes S708.

S708: The AzF sends a revocation response #b1 to the API invoker, where the revocation response #b1 may indicate one of the following: the first token is successfully revoked, a procedure of revoking the first token has been triggered, or a revocation request (for example, the revocation request #b2 in S705 or the revocation request #b1 in S706) used to request to revoke the first token has been received.

Optionally, after receiving the revocation response #b1, the API invoker may update a token database, for example, identify the first token in the token database as revoked.

In some possible manners, the API invoker may further forward the revocation response #b1 to the user agent.

According to the methods shown in FIG. 6 and FIG. 7, the user agent may initiate the revocation procedure of the first token based on the auxiliary information, so that the revocation procedure is authorized by the user, thereby avoiding that a service desired by the user is interrupted due to authorization revocation, that is, avoiding denial of service for the user.

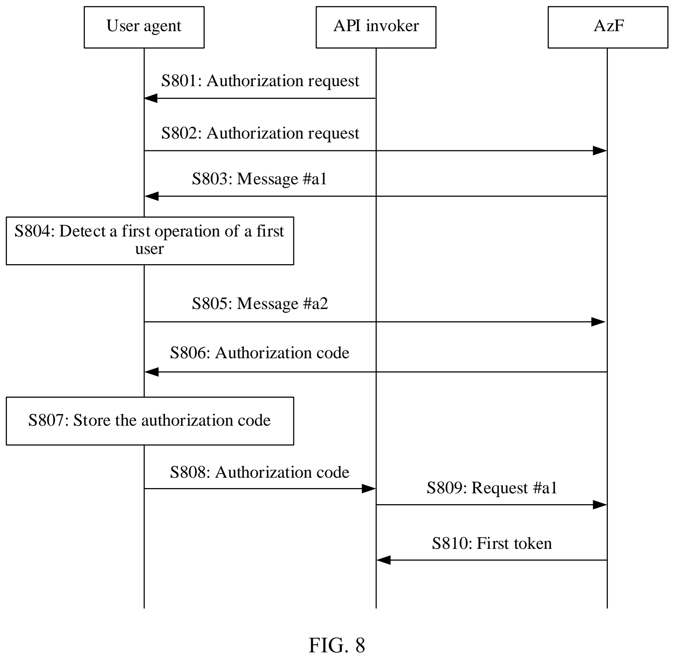

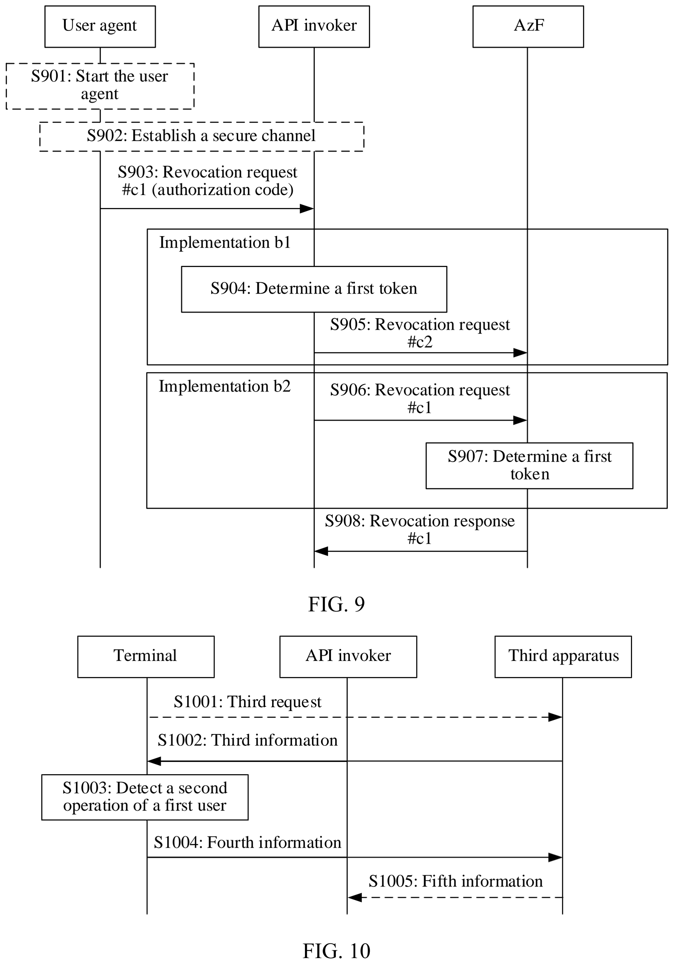

An embodiment of this application provides another communication method. The method is another possible example of the method shown in FIG. 3. In the method, first information is an authorization code, and a user agent may initiate a revocation procedure of a first token based on the authorization code. Refer to flowcharts shown in FIG. 8 and FIG. 9. The following specifically describes a procedure of the method by using an example in which a first apparatus is an AzF or an API invoker.

FIG. 8 shows a method for applying for a first token. The method includes the following steps.

S801: An API invoker sends an authorization request to a user agent in a terminal.

S802: The user agent sends the authorization request to an AzF.

S803: The AzF sends a message #a1 to the user agent.

S804: The user agent detects a first operation of a first user, where the first operation may indicate that the first user agrees to authorization of a first service to the first user.

S805: The user agent sends a message #a2 to the AzF.

S806: The AzF sends an authorization code corresponding to the first token to the user agent.

For specific content of S801 to S806, refer to S401 to S404 and S606 and S607. Details are not described herein again.

S807: The user agent stores the authorization code.

S808: The user agent sends the authorization code to the API invoker.

An execution sequence of S807 and S808 is not limited in this application.

S809: The API invoker sends a request #a1 to the AzF.

S810: The AzF sends the first token to the API invoker.

For specific content of S808 to S810, refer to S609 to S611. Details are not described herein again.

For specific content of S801 to S806 and S808 to S810, refer to descriptions of a token application procedure in the IETF standard.

According to the method shown in FIG. 8, the user agent may store the authorization code corresponding to the first token.

FIG. 9 shows a method for revoking a first token. The method includes the following steps.

S901: After detecting an operation of a first user for running a user agent, a terminal starts the user agent.

For specific content of S901, refer to S502. Details are not described herein again.

Optionally, the user agent may further store indication information of the first user. For specific content of the indication information of the first user, refer to the description of the indication information of the first user in S302. Details are not described herein again.

S902: Establish a secure channel between the user agent and an API invoker.

For specific content of S902, refer to S702. Details are not described herein again.

S903: The user agent sends a revocation request #c1 including an authorization code to the API invoker.

The revocation request #c1 may be the first request in S302. Correspondingly, for S903, refer to S302. Details are not described herein again.

In implementation b1, the first apparatus may be an API invoker. After S903, the method shown in FIG. 9 includes S904 and S905.

S904: The API invoker determines the first token based on the verification code.

For specific content of S904, refer to manner a3. Details are not described herein again.

S905: The API invoker sends a revocation request #c2 to an AzF.

For specific content of S905, refer to S705. Details are not described herein again.

In implementation b2, the first apparatus may be an AzF. After S903, the method shown in FIG. 9 includes S906 and S907.

S906: The API invoker sends the revocation request #c1 including the authorization code to an AzF.

S907: The AzF determines the first token based on the authorization code.

For specific content of S907, refer to manner a3. Details are not described herein again.

After determining the first token, the AzF may revoke the first token. A specific process in which the AzF revokes the first token is not limited in this application.

After S905 or S907, the method shown in FIG. 9 further includes S908.

S908: The AzF sends a revocation response #c1 to the API invoker, where the revocation response #c1 may indicate one of the following: the first token is successfully revoked, a procedure of revoking the first token has been triggered, or a revocation request (for example, the revocation request #c2 in S905 or the revocation request #c1 in S906) used to request to revoke the first token has been received.

For specific content of S908, refer to S708. Only the revocation response #b1 is replaced with the revocation response #c1. Details are not described herein again.

According to the methods shown in FIG. 8 and FIG. 9, the user agent may initiate the revocation procedure of the first token based on the authorization code, so that the revocation procedure is authorized by the user, thereby avoiding that a service desired by the user is interrupted due to authorization revocation, that is, avoiding denial of service for the user.

An embodiment of this application provides another communication method. FIG. 10 is a schematic flowchart corresponding to a communication method according to an embodiment of this application. In FIG. 10, the method is illustrated by using an example in which a terminal and a third apparatus are execution bodies of the interaction illustration. However, the execution bodies of the interaction illustration are not limited in this application. The third apparatus may be an AzF, or may be a module, for example, a chip, a chip system, or a processor, used in the AzF, or may be a logical node, a logical module, or software that can implement all or some functions of the AzF. Optionally, the terminal in FIG. 10 may be replaced with a user agent.

S1001: The terminal sends a third request, and correspondingly, the third apparatus receives the third request.

The third request includes indication information of a first service, and may be used to request to revoke authorization for the first service. For specific content of the indication information of the first service, refer to the "service indication information" in the foregoing term description part. Details are not described herein again.

For a manner in which the terminal sends the third request, refer to the manner in which the terminal sends the first request in S302. Only the first apparatus is replaced with the third apparatus, and the first request is replaced with the third request. Details are not described herein again.

S1002: The third apparatus sends third information, and correspondingly, the terminal receives the third information.

The third information may indicate that to-be-revoked authorization is first authorization that allows a first user to use the first service. For example, the third information may include the indication information of the first service, and the indication information of the first service is included in a specified field or message. In this way, when the terminal parses out the indication information of the first service from the specified field or message, the terminal may determine that the to-be-revoked authorization is the first authorization that allows the first user to use the first service.

For a manner in which the third apparatus sends the third information, refer to the manner in which the first apparatus sends the first response in step A4. Only the first apparatus is replaced with the third apparatus, and the first response is replaced with the third information. Details are not described herein again.

S 1003: The terminal detects a second operation of the first user, where the second operation may indicate that the first user agrees to revocation of the first authorization.

After receiving the third information, the terminal may query whether the first user agrees to revocation of the first authorization. For example, after receiving the third information, the terminal displays a pop-up window #2. The pop-up window #2 includes a display area of "whether to agree to revoke authorization of the first service for the first user" and operation areas of "yes" and "no". The second operation may include a touchscreen operation performed by the first user on the operation area of "yes".

S1004: The terminal sends fourth information, and correspondingly, the third apparatus receives the fourth information.

The fourth information may be sent by the terminal in response to the second operation. The fourth information may be used to trigger revocation of the first authorization.

For a manner in which the terminal sends the fourth information, refer to the manner in which the terminal sends the first request in S302. Only the first apparatus is replaced with the third apparatus, and the first request is replaced with the fourth information. Details are not described herein again.

S 1005: The third apparatus sends fifth information, and correspondingly, an API invoker receives the fifth information.

The fifth information is information used to revoke the first authorization. Optionally, the fifth information is a second token.

In some examples, a type of the second token is revoked token. A field #1 in the second token may be related to the first authorization. For example, the first token is a token for authorizing the first service to the first user, and the field #1 in the second token is indication information of the first token. In this way, after receiving the second token, the API invoker may determine, based on the indication information of the first token in the field #1, that the first authorization is to be revoked.

In some other examples, a value of a first field in the second token is a specified value. The specified value is, for example, a null (null) value or another value. For example, a type of the second token is access token. A field #1 in the second token is related to the first authorization, and a value of a first field in the second token is a specified value. In this way, after receiving the second token, the API invoker may determine, based on the field #1 and the first field, that the first authorization is to be revoked.

S1001 and S1005 are optional steps.

According to the method shown in FIG. 10, only after the second operation of the first user is detected, the terminal sends the fourth information used to trigger revocation of the first authorization, that is, trigger a token procedure of a token, thereby avoiding that a service desired by the user is interrupted due to authorization revocation, that is, avoiding denial of service for the user.

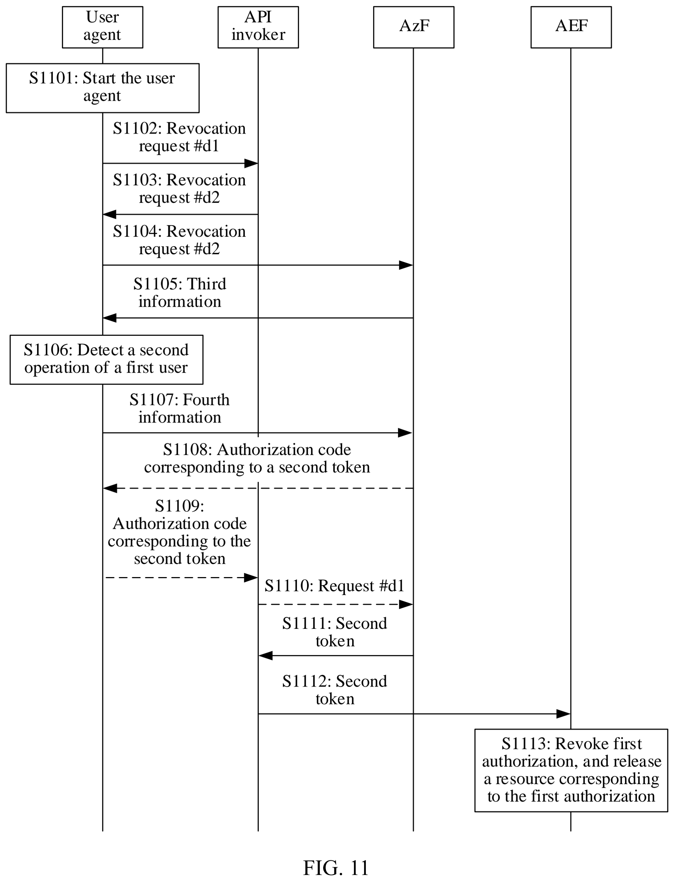

An embodiment of this application provides another communication method. The method is a possible example of the method shown in FIG. 10. Refer to a flowchart shown in FIG. 11. The following specifically describes a procedure of the method by using an example in which a first apparatus is an AzF.

S1101: After detecting an operation of a first user for running a user agent, a terminal starts the user agent.

For specific content of S1101, refer to S502. Details are not described herein again.

S1102: The user agent sends a revocation request #d1 to an API invoker.

The revocation request #d1 includes indication information of a first service, and is used to request to revoke first authorization for the first service.

S1103: The API invoker sends a revocation request #d2 to the user agent.

The revocation request #d2 includes the indication information of the first service, and is used to request to revoke the first authorization for the first service.

S1104: The user agent sends the revocation request #d2 to an AzF.

The revocation request #d2 may be the third request in S1001. Correspondingly, for specific content of S1104, refer to S1001. Details are not described herein again.

S1105: The AzF sends third information to the user agent.

For specific content of S1105, refer to S1002. Details are not described herein again.

S1106: The user agent detects a second operation of the first user, where the second operation may indicate that the first user agrees to revocation of authorization of the first service for the first user.

S1107: The user agent sends fourth information to the AzF.

For specific content of S1107, refer to S1004. Details are not described herein again.

S1108: The AzF sends an authorization code corresponding to a second token to the user agent.

For specific content of the second token, refer to the description of the second token in S1005. Details are not described herein again.

S1109: The user agent sends the authorization code corresponding to the second token to the API invoker.

S1110: The API invoker sends a request #d1 to the AzF. The request #d1 includes the authorization code corresponding to the second token, and may be used to request to obtain the second token.

S1008 to S1110 are optional steps.

S1111: The AzF sends the second token to the API invoker.

S1112: The API invoker sends the second token to an AEF.

S1113: The AEF revokes the first authorization based on the second token, and releases a resource corresponding to the first authorization.

According to the method shown in FIG. 11, the user agent may initiate an authorization revocation procedure based on the second token, so that the revocation procedure is authorized by the user, thereby avoiding that a service desired by the user is interrupted due to authorization revocation, that is, avoiding denial of service for the user.

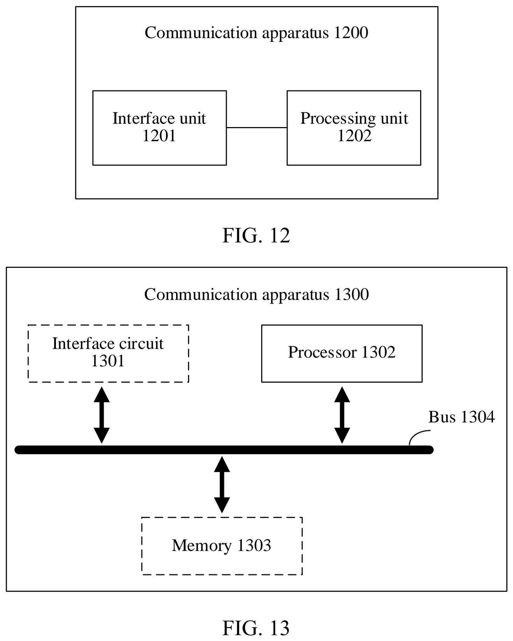

Based on a same technical concept as the foregoing method embodiments, an embodiment of this application provides a communication apparatus in FIG. 12, which may be configured to perform a function of a related step in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 12, and includes an interface unit 1201 and a processing unit 1202. The communication apparatus 1200 may be a terminal, an API invoker, an apparatus (for example, a terminal or an AF) including the API invoker, or an AzF, or may be a module, for example, a chip, a chip system, or a processor, used in the terminal, the API invoker, the apparatus including the API invoker, or the AzF, or may be a logical node, a logical module, or software that can implement all or some functions of the terminal, the API invoker, the apparatus including the API invoker, or the AzF. In addition, the communication apparatus 1200 may implement the communication method provided in the foregoing embodiments and examples of this application. Functions of the units in the communication apparatus 1200 are described below.

The interface unit 1201 is configured to input and/or output information. When outputting information, the interface unit 1201 may output the information to an apparatus other than the communication apparatus 1200, or may output the information to another unit in the communication apparatus 1200. In some manners, the interface unit 1201 may be implemented by using at least one of a physical interface, a communication module, a communication interface, and an input/output interface. In some other manners, the interface unit 1201 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 1202 may be configured to support the communication apparatus 1200 in performing processing actions in the foregoing method embodiments. The processing unit 1202 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

In an implementation, the communication apparatus 1200 is used in the terminal in the embodiment of this application shown in FIG. 3. The following describes a specific function of the processing unit 1202 in this implementation.

The processing unit 1202 is configured to: determine first information, where the first information is used to determine a first token, and the first token is a token for authorizing a first service to a first user; and send a first request through the interface unit 1201, where the first request includes the first information, and the first request is used to request to revoke the first token.

In some possible manners, the processing unit 1202 is further configured to receive a first response through the interface unit 1201, where the first response indicates one of the following: the first token is successfully revoked, a procedure of revoking the first token has been triggered, or the first request has been received, the first response includes a random number or second information, and the second information is obtained based on a one-way function and the random number.

In some other possible manners, the processing unit 1202 is further configured to: generate the random number and the second information, where the second information is obtained based on the one-way function and the random number; and send the second information to an authorization function network element through the interface unit 1201, where the second information corresponds to the first token.

Optionally, the processing unit 1202 is further configured to: before generating the random number and the second information, detect a first operation of the first user, where the first operation indicates that the first user agrees to authorization of the first service to the first user.

In some examples, the processing unit 1202 is further configured to: detect a first operation of the first user, where the first operation indicates that the first user agrees to authorization of the first service to the first user; and obtain and store auxiliary information.

In some possible manners, the processing unit 1202 is further configured to receive, through the interface unit 1201, an authorization code corresponding to the first token, where the authorization code is used to determine that the first token corresponding to the auxiliary information is a token authorized by the authorization function network element.

In some other possible manners, the processing unit 1202 is further configured to receive the authorization code corresponding to the first token from an authorization function network element through the interface unit 1201.

Optionally, the processing unit 1202 is further configured to: through the interface unit 1201, send the first request to the authorization function network element based on address information of the authorization function network element; or send the first request to the authorization function network element through an application programming interface invoker.

In another implementation, the communication apparatus 1200 is used in the first apparatus in the embodiment of this application shown in FIG. 3. The following describes a specific function of the processing unit 1202 in this implementation.

The processing unit 1202 is configured to: receive a first request from a terminal through the interface unit 1201, where the first request is used to request to revoke a first token, the first request includes first information, the first information is used to determine the first token, and the first token is a token for authorizing a first service to a first user; and determine the first token based on the first request.

In some possible manners, the processing unit 1202 is further configured to send a first response to the terminal through the interface unit 1201, where the first response indicates one of the following: the first token is successfully revoked, a procedure of revoking the first token has been triggered, or the first request has been received, the first response includes a random number or second information, and the second information is obtained based on a one-way function and the random number.

Optionally, the processing unit 1202 is further configured to: receive the second information from the terminal through the interface unit 1201, where the second information is obtained based on the one-way function and the random number; and associate the second information with the first token.

In some possible manners, the processing unit 1202 is further configured to send a notification message to an application programming interface invoker through the interface unit 1201, where the notification message indicates one of the following: the first token is successfully revoked, a procedure of revoking the first token has been triggered, or the first request has been received, and the notification message includes indication information of the first token.

Optionally, the processing unit 1202 is further configured to send an authorization code corresponding to the first token to the terminal through the interface unit 1201.

For example, the processing unit 1202 is further configured to: revoke the first token; or send a second request to an authorization function network element through the interface unit 1201, where the second request is used to request to revoke the first token.

In some possible manners, the processing unit 1202 is further configured to: through the interface unit 1201, receive the first request sent by the terminal based on address information of the authorization function network element; or receive the first request from the terminal through the application programming interface invoker.

In another implementation, the communication apparatus 1200 is used in the terminal in the embodiment of this application shown in FIG. 10. The following describes a specific function of the processing unit 1202 in this implementation.

The processing unit 1202 is configured to: receive third information through the interface unit 1201, where the third information indicates that to-be-revoked authorization is first authorization that allows a first user to use a first service; detect a second operation of the first user, where the second operation indicates that the first user agrees to revocation of the first authorization; and send fourth information through the interface unit 1201, where the fourth information is used to trigger revocation of the first authorization.

In some possible manners, the processing unit 1202 is further configured to: before receiving the third information, send a third request through the interface unit 1201, where the third request includes indication information of the first service.

In another implementation, the communication apparatus 1200 is used in the third apparatus in the embodiment of this application shown in FIG. 10. The following describes a specific function of the processing unit 1202 in this implementation.

The processing unit 1202 is configured to: send third information to a terminal through the interface unit 1201, where the third information indicates that to-be-revoked authorization is first authorization that allows a first user to use a first service; and receive, through the interface unit 1201, fourth information sent by the terminal based on a second operation of the first user, where the second operation indicates that the first user agrees to revocation of the first authorization, and the fourth information is used to trigger revocation of the first authorization.

In some possible manners, the processing unit 1202 is further configured to receive a third request from the terminal through the interface unit 1201, where the third request includes indication information of the first service.

In some examples, the processing unit 1202 is further configured to send fifth information to an application programming interface invoker through the interface unit 1201, where the fifth information is used to revoke the first authorization.

For more detailed descriptions of the processing unit 1202 and the interface unit 1201, directly refer to related descriptions in the method embodiments shown in FIG. 3 and FIG. 5. Details are not described herein again.

It should be noted that division into the modules in the foregoing embodiments of this application is an example, and is merely logical function division. During actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 13, which may be configured to perform related steps in the foregoing method embodiments. The communication apparatus may be a terminal, an API invoker, an apparatus (for example, a terminal or an AF) including the API invoker, or an AzF, or may be a module, for example, a chip, a chip system, or a processor, used in the terminal, the API invoker, the apparatus including the API invoker, or the AzF, or may be a logical node, a logical module, or software that can implement all or some functions of the terminal, the API invoker, the apparatus including the API invoker, or the AzF. In addition, the communication apparatus may implement the communication method provided in the foregoing embodiments and examples of this application, and have a function of the communication apparatus shown in FIG. 12. As shown in FIG. 13, the communication apparatus 1300 includes a processor 1302. Optionally, the communication apparatus 1300 further includes an interface circuit 1301 and a memory 1303. The interface circuit 1301, the processor 1302, and the memory 1303 are coupled to each other.

Optionally, the interface circuit 1301, the processor 1302, and the memory 1303 are coupled to each other through a bus 1304. The bus 1304 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 13, but this does not mean that there is only one bus or only one type of bus.

The interface circuit 1301 is configured to input and/or output information. When outputting information, the interface circuit 1301 may output the information to an apparatus other than the communication apparatus 1300, or may output the information to another unit in the communication apparatus 1300. For example, the interface circuit 1301 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 1302 may be configured to support the communication apparatus 1300 in performing processing actions in the foregoing method embodiments. When the communication apparatus 1300 is configured to implement the foregoing method embodiments, the processor 1302 may be further configured to implement functions of the foregoing processing unit 1202. The processor 1302 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor or the like.

In an implementation, the communication apparatus 1300 is used in the terminal in the embodiment of this application shown in FIG. 3. The following describes a specific function of the processor 1302 in this implementation.

The processor 1302 is configured to: determine first information, where the first information is used to determine a first token, and the first token is a token for authorizing a first service to a first user; and send a first request through the interface circuit 1301, where the first request includes the first information, and the first request is used to request to revoke the first token.

In another implementation, the communication apparatus 1300 is used in the first apparatus in the embodiment of this application shown in FIG. 3. The following describes a specific function of the processor 1302 in this implementation.

The processor 1302 is configured to: receive a first request from a terminal through the interface circuit 1301, where the first request is used to request to revoke a first token, the first request includes first information, the first information is used to determine the first token, and the first token is a token for authorizing a first service to a first user; and determine the first token based on the first request.

In another implementation, the communication apparatus 1300 is used in the terminal in the embodiment of this application shown in FIG. 10. The following describes a specific function of the processor 1302 in this implementation.

The processor 1302 is configured to: receive third information through the interface circuit 1301, where the third information indicates that to-be-revoked authorization is first authorization that allows a first user to use a first service; detect a second operation of the first user, where the second operation indicates that the first user agrees to revocation of the first authorization; and send fourth information through the interface circuit 1301, where the fourth information is used to trigger revocation of the first authorization.

In another implementation, the communication apparatus 1300 is used in the third apparatus in the embodiment of this application shown in FIG. 10. The following describes a specific function of the processor 1302 in this implementation.

The processor 1302 is configured to: send third information to a terminal through the interface circuit 1301, where the third information indicates that to-be-revoked authorization is first authorization that allows a first user to use a first service; and receive, through the interface circuit 1301, fourth information sent by the terminal based on a second operation of the first user, where the second operation indicates that the first user agrees to revocation of the first authorization, and the fourth information is used to trigger revocation of the first authorization.

For a specific function of the processor 1302, refer to the descriptions in the communication method provided in the foregoing embodiments and examples of this application, and the specific function descriptions of the communication apparatus 1200 in the embodiment of this application shown in FIG. 12. Details are not described herein again.

The memory 1303 is configured to store program instructions, data, and/or the like. Specifically, the program instructions may include program code, and the program code includes computer operation instructions. The memory 1303 may include a RAM, and may further include a non-volatile memory (non-volatile memory), for example, at least one magnetic disk memory. The processor 1302 executes the program instructions stored in the memory 1303, and uses the data stored in the memory 1303, to implement the foregoing function, so as to implement the communication method provided in the foregoing embodiments of this application. The memory 1303 may be integrated with the processor 1302, or may be a memory outside the communication apparatus.

It may be understood that the memory 1303 in FIG. 13 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory for the system and the method described in this specification aims to include but is not limited to these memories and any memory of another appropriate type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by a computer. By way of example and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of an instruction or a data structure and that can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A communication method, comprising:
determining, by a terminal, first information, wherein the first information is used to determine a first token, and the first token is a token for authorizing a first service to a first user; and
sending, by the terminal, a first request, wherein the first request comprises the first information, and the first request is used to request to revoke the first token.

2. The method according to claim 1, wherein the first information comprises a random number, and the random number is used to determine the first token.

3. The method according to claim 2, wherein the random number is used to determine second information via a one-way function, and the second information is used to determine the first token.

4. The method according to claim 2 or 3, further comprising:
receiving, by the terminal, a first response, wherein the first response indicates one of the following: the first token is successfully revoked, a procedure of revoking the first token has been triggered, or the first request has been received, the first response comprises the random number or the second information, and the second information is obtained based on the one-way function and the random number.

5. The method according to any one of claims 2 to 4, further comprising:
generating, by the terminal, the random number and the second information, wherein the second information is obtained based on the one-way function and the random number; and
sending, by the terminal, the second information to an authorization function network element, wherein the second information corresponds to the first token.

6. The method according to claim 5, before generating, by the terminal, the random number and the second information, further comprising:
detecting, by the terminal, a first operation of the first user, wherein the first operation indicates that the first user agrees to authorization of the first service to the first user.

7. The method according to claim 1, wherein the first information comprises auxiliary information used to identify the first token.

8. The method according to claim 7, wherein the auxiliary information comprises at least one of the following:
information used to identify an authorization scope of the first token;
information used to identify a service application programming interface corresponding to the first token;
information used to identify an authorization function network element corresponding to the first token;
information used to identify the first user;
information used to identify an application programming interface exposing function corresponding to the first token;
information used to identify a validity period of the first token; and
information used to identify issuance time of the first token.

9. The method according to claim 7 or 8, further comprising:
detecting, by the terminal, a first operation of the first user, wherein the first operation indicates that the first user agrees to authorization of the first service to the first user; and
obtaining and storing, by the terminal, the auxiliary information.

10. The method according to claim 9, further comprising:
receiving, by the terminal, an authorization code corresponding to the first token, wherein the authorization code is used to determine that the first token corresponding to the auxiliary information is a token authorized by the authorization function network element.

11. The method according to claim 1, wherein the first information comprises an authorization code corresponding to the first token.

12. The method according to claim 11, further comprising:
receiving, by the terminal, the authorization code corresponding to the first token from an authorization function network element.

13. The method according to claim 11 or 12, wherein the first request further comprises indication information of the first user, and the indication information of the first user and the first information are used to determine the first token.

14. The method according to any one of claims 1 to 13, wherein sending, by the terminal, the first request comprises at least one of the following:
sending, by the terminal, the first request to the authorization function network element based on address information of the authorization function network element; or
sending, by the terminal, the first request to the authorization function network element through an application programming interface invoker.

15. A communication method, comprising:
receiving a first request from a terminal, wherein the first request is used to request to revoke a first token, the first request comprises first information, the first information is used to determine the first token, and the first token is a token for authorizing a first service to a first user; and
determining the first token based on the first request.

16. The method according to claim 15, wherein the first information comprises a random number, and the random number is used to determine the first token.

17. The method according to claim 16, wherein the random number is used to determine second information via a one-way function, and the second information is used to determine the first token.

18. The method according to claim 16 or 17, further comprising:
sending a first response to the terminal, wherein the first response indicates one of the following: the first token is successfully revoked, a procedure of revoking the first token has been triggered, or the first request has been received, the first response comprises the random number or the second information, and the second information is obtained based on the one-way function and the random number.

19. The method according to any one of claims 16 to 18, further comprising:
receiving the second information from the terminal, wherein the second information is obtained based on the one-way function and the random number; and
associating the second information with the first token.

20. The method according to any one of claims 16 to 19, further comprising:
sending a notification message to an application programming interface invoker, wherein the notification message indicates one of the following: the first token is successfully revoked, a procedure of revoking the first token has been triggered, or the first request has been received, and the notification message comprises indication information of the first token.

21. The method according to claim 15, wherein the first information comprises auxiliary information used to identify the first token.

22. The method according to claim 21, wherein the auxiliary information comprises at least one of the following:
information used to identify an authorization scope of the first token;
information used to identify a service application programming interface corresponding to the first token;
information used to identify an authorization function network element corresponding to the first token;
information used to identify the first user;
information used to identify an application programming interface exposing function corresponding to the first token;
information used to identify a validity period of the first token; and
information used to identify issuance time of the first token.

23. The method according to claim 15, wherein the first information comprises an authorization code corresponding to the first token.

24. The method according to claim 23, further comprising:
sending the authorization code corresponding to the first token to the terminal.

25. The method according to claim 23 or 24, wherein the first request further comprises indication information of the first user, and the indication information of the first user and the first information are used to determine the first token.

26. The method according to any one of claims 15 to 25, further comprising:
revoking the first token; or
sending a second request to the authorization function network element, wherein the second request is used to request to revoke the first token.

27. The method according to any one of claims 15 to 26, wherein receiving the first request from the terminal comprises at least one of the following:
receiving the first request sent by the terminal based on address information of the authorization function network element; or
receiving the first request from the terminal through the application programming interface invoker.

28. A communication apparatus, comprising:
a communication unit, configured to receive and send information; and
a processing unit, configured to perform the method according to any one of claims 1 to 27 through the communication unit.

29. A communication apparatus, comprising a processor, wherein the processor is configured to perform the method according to any one of claims 1 to 27.

30. A computer program product, wherein the computer program product comprises computer program code, and when the computer program code is run, the method according to any one of claims 1 to 27 is implemented.
